# EUROPEAN PATENT APPLICATION

(11) **EP 1 650 632 A2**
(43) Date of publication of application: **26.04.2006**
(21) Application number: 05255535.6
(22) Date of filing: 09.09.2005
(51) Int. Cl.: G06F 1/00

(54) **Information processing apparatus and method, recording medium, program, and information processing system**

(30) Priority: 17.09.2004 JP 2004272218
(71) Applicant: SONY CORPORATION, Tokyo (JP)
(72) Inventor: Abe, Yuichi, Sony Corporation, Tokyo (JP); Sasamura, Takao, Sasamura Corporation, Kanagawa (JP)
(74) Representative: Robinson, Nigel Alexander Julian

(57) **Abstract**

An information processing system having a first information processing apparatus and a second information processing apparatus connected via a network. The first information processing apparatus comprises first storing means storing music material data constituting music data for playing back music; second storing means storing music composition data describing, for each item of the music material data, playback conditions for music to be played back using the music data; and transmitting means transmitting the music material data or the music composition data to the second information processing apparatus. The second information processing apparatus comprises receiving means receiving the music material data or the music composition data transmitted from the first information processing apparatus; and music data generating means generating music data for playing back music in accordance with the playback conditions described in the music composition data on the basis of the music material data and the music composition data.

## Description

### BACKGROUND OF THE INVENTION

### 1. Field of the Invention

The present invention relates to an information processing apparatus and method, recording medium, program, and information processing system, and particularly relates to an information processing apparatus and method, recording medium, program, and information processing system capable of providing a wide variety of music in accordance with a user's circumstances and preferences.

### 2. Description of Related Art

In recent years, as information communication technology has progressed, a situation has come about where various data is being exchanged via communication networks. In particular, needs of music data for playing back music have increased, and attention has become focused on music distribution services where listening to music is made possible by a user purchasing music data over the Internet, .storing the music data on a PC (Personal Computer) or a portable music player, and then playing back the music.

With such music distribution services, music data is stored (recorded) at a server (hereinafter referred to as a music distribution server) for distributing music data and can then be downloaded by an arbitrary terminal device connected to a communication network. The various needs from the user can then be catered for by storing music data for music of a variety of genres at the music distribution server.

With music data distribution systems in the related art, in a case of searching music data, a user searches for desired music data from items classified into categories such as a music title, an artist name, genre and age, etc.

However, when the number of items of music data stored on the music distribution server increases, it is necessary for the user to search for desired music data from an extremely large number of items of music data.

As a method of resolving these problems in music data distribution systems, Published Japanese Patent Application (KOKAI) No. 2004-138972 (Patent Document 1), for example, discloses a method of searching for desired music data in which, in a case where information such as the title of a piece of music or the name of the artist etc. is not known, a user makes use of lyrics of the music, the year the music was put on market, or a program that used the music to search for the music have been proposed.

Further, Published Japanese Patent Application (KOKAI) No. 2001-306580 (Patent Document 2), for example, discloses music data distribution systems where music data is searched using sensitivity information to images and impressions such as "comfortable", "exhilarating", or "cheerful", felt when the music is listened to.

However, the aforementioned technology is not always possible to allow searches for the music data suitable to the current condition of the user.

In technology disclosed in Patent Document 2 described above, it is possible to search for music data using words expressing the user's feelings even in a case where the user has no information regarding the music. However, because the music is played back as it is on the basis of music data stored on the music distribution server, it is not possible to arrange music in line with the current condition and preferences of the user.

Namely, in distribution of music in the related art including CDs (Compact Discs) and music distribution services, it has only been possible for a user to listen to the music being played back as it is (without any arrangement) on the basis of music data provided by a music provider. In other words, it has not been possible for a user to remove data of a vocal track from the provided music data for arrangement as background music (BGM), change sound image localization such as for musical keyboards, drums, bass, guitar, and vocals etc. so as to make a sound field unique to the user, or change the ambience of music by mixing (synthesizing) data (referred to as "track data" in the following) for playing back each track.

In the related art, because it is an important operation in deciding the ambience of a piece of music to take the balance of a number of tracks to give a single piece of music, such an operation has been carried out by only parts of specialists.

There is therefore a problem in that it is not possible for a user to arrange a piece of music so as to arrange and change the ambience of the music and enjoy the music according to the condition and preferences of the user, such as when the user gets up in the morning, is relaxing, is about to sleep for the night, is alone, is listening with a number of people, wishes to enjoy just the music, or wishes to listen while performing another operation.

In order to address this situation, the present invention makes it possible to change the ambience of a piece of music in an easy way according to the condition and preferences of the user.

### SUMMARY OF THE INVENTION

An information processing system of the present invention includes a first information processing apparatus and a second information processing apparatus. The first information processing apparatus includes first storing means for storing music material data constituting music data for playing back music, second storing means for storing music composition data describing, for each item of the music material data, playback conditions for music to be played back using the music data composed of one or a plurality of items of the music material data, and transmitting means for transmitting the music material data or the music composition data to the second information processing apparatus. The second information processing apparatus includes receiving means for receiving the music material data or the music composition data sent from the first information processing apparatus, and music data generating means for generating music data for playing back music using the playback conditions described in the music composition data on the basis of the music material data and the music composition data.

In the information processing system of the present invention, the first information processing apparatus stores the music material data constituting the music data for playing back music, stores the music composition data describing, for each item of the music material data, playback conditions for music played back using music data constructed from one or a plurality of items of the music material data. The music material data or the music composition data is then sent to the second information processing apparatus. The music material data or the music composition data sent from the first information processing apparatus is received by the second information processing apparatus and the music data for playing back music using the playback conditions described in the music composition data is generated on the basis of the music material data and the music composition data.

An information processing system of the present invention comprises a first information processing apparatus, a second information processing apparatus, a third information processing apparatus and a fourth information processing apparatus. The first information processing apparatus includes music material data generating means for generating music material data constituting music data for generating music, and first transmitting means for transmitting generated music material data to the third information processing apparatus. The second information processing apparatus includes music composition data generating means for generating music composition data describing, for each item of the music material data, playback conditions for music to be played back using the music data constructed from one or a plurality of items of the music material data, and second transmitting means for transmitting the generated music composition data to the third information processing apparatus. The third information processing apparatus includes first receiving means for receiving the music material data sent from the first information processing apparatus or the music composition data sent from the second information processing apparatus, first storing means for storing the received music material data, second storing means for storing the received music composition data, and third transmitting means for transmitting the music material data or the music composition data to the fourth information processing apparatus. The fourth information processing apparatus includes second receiving means for receiving the music material data or the music composition data sent from the third information processing apparatus, and music data generating means for generating music data for playing back music using the playback conditions described in the music composition data on the basis of the music material data and the music composition data.

The third transmitting means is capable of transmitting the music composition data or all music material data making up a single item of the music data to the fourth information processing apparatus.

The music composition data generating means is capable of generating the music composition data describing, for each item of the music material data, playback conditions containing information indicating volume, sound quality and sound image localization, information between music tracks, tracking down information, and effect information.

The first transmitting means may be configured to further transmit to the third information processing apparatus first rights management information containing information indicating access rights, copying rights and editing rights for the music material data to be transmitted. The second transmitting means may be configured to further transmit to the third information processing apparatus second rights management information containing information indicating access rights, copying rights and editing rights for the music composition data to be transmitted. The first receiving means may be configured to further receive the first rights management information transmitted from the first information processing apparatus or the second rights management information transmitted from the second information processing apparatus. The third transmitting means may be configured to further transmit the music material data or the music composition data to the fourth information processing apparatus on the basis of the first rights management information and the second rights management information.

In the information processing system of the present invention, the first information processing apparatus generates the music material data constituting the music data for playing back music and transmits the generated music material data to the third information processing apparatus. The second information processing apparatus generates the music composition data describing, for each item of the music material data, playback conditions for the music to be played back in accordance with the music data composed of one or a plurality of items of the music material data, and transmits the generated music composition data to the third information processing apparatus. The third information processing apparatus receives the music material data transmitted from the first information processing apparatus or the music composition data transmitted from the second information processing apparatus, stores the received music material data, stores the received music composition data, and transmits the music material data or the music composition data to the fourth information processing apparatus. The music material data or the music composition data transmitted from the third information processing apparatus is received by the fourth information processing apparatus and the music data for playing back music in accordance with the playback conditions described in the music composition data is generated on the basis of the music material data and the music composition data.

The information processing apparatus of the present invention includes first storing means for storing music material data constituting music data for playing back music, second storing means for storing music composition data describing, for each item of the music material data, playback conditions for the music to be played back in accordance with the music data composed of one or a plurality of items of the music material data, and music data generating means for generating the music data for playing back the music in accordance with the playback conditions described in the music composition data on the basis of the music material data and the music composition data.

The second storing means may be configured to store the music composition data describing, for each item of music material data, playback conditions containing information indicating volume, sound quality and sound image localization, information between music tracks, mixing down information, and effect information.

The second storing means may be configured to store the music composition data for describing the playback conditions for the music to be played back in accordance with one item of the music material data.

An information processing method of the present invention includes a first storing step of storing music material data constituting music data for playing back music, a second storing step of storing music composition data describing, for each item of the music material data, playback conditions for the music to be played back in accordance with the music data composed of one or a plurality of items of the music material data, and a music data generating step of generating the music data for playing back the music in accordance with the playback conditions described in the music composition data on the basis of the music material data and the music composition data.

A program to be stored in a recording medium of the present invention includes a first storing step of storing music material data constituting music data for playing back music, a second storing step of storing music composition data describing, for each item of the music material data, playback conditions for the music to be played back in accordance with the music data composed of one or a plurality of items of the music material data, and a music data generating step of generating the music data for playing back the music in accordance with the playback conditions described in the music composition data on the basis of the music material data and the music composition data.

The program of the present invention causes a computer to execute a first storing step of storing music material data constituting music data for playing back music, a second storing step of storing music composition data describing, for each item of the music material data, playback conditions for the music to be played back in accordance with the music data composed of one or a plurality of items of the music material data, and a music data generating step of generating the music data for playing back the music in accordance with the playback conditions described in the music composition data on the basis of the music material data and the music composition data.

With the information processing apparatus and method, recording medium, and program of the present invention, music material data constituting music data for playing back music is stored, music composition data describing, for each item of the music material data, playback conditions for the music to be played back in accordance with the music data composed of one or a plurality of items of the music material data is stored, and the music data for playing back the music in accordance with the playback conditions described in the music composition data on the basis of the music material data and the music composition data is generated.

According to the present invention, it is possible to play back music. Further, according to at least preferred embodiments of the present invention, even for the same music, it is possible to play back the music with a different ambience with ease by changing the combination of the music material data and the music composition data.

Embodiments of the present invention will now be described by way of example only, with reference to the accompanying drawings in which:
FIG. 1 is a view showing an embodiment of a music data distribution system to which an example of the present invention is applied.
FIG. 2 is a block diagram showing an example configuration for a music material data generating apparatus.
FIG. 3 is a block diagram showing an example configuration for functions of the music material data generating apparatus.
FIG. 4 is a block diagram showing an example configuration for functions of a music composition data generating apparatus.
FIG. 5 is a block diagram showing a configuration for functions of a server.
FIG. 6 is a block diagram showing a configuration for functions of a playback apparatus.
FIG. 7 is a flowchart illustrating registration processing of music material data.
FIG. 8 is a view illustrating the music material data.
FIG. 9 is a view illustrating a registration information table.
FIG. 10 is a flowchart illustrating registration processing of music composition data.
FIG. 11 is a view illustrating the music composition data.
FIG. 12 is a view illustrating rights management information.
FIG. 13 is a flowchart illustrating registration processing.
FIG. 14 is a view illustrating the music material data.
FIG. 15 is a view illustrating the music composition data.
FIG. 16 is a view illustrating copyright data.
FIG. 17 is a flowchart illustrating request processing by a playback apparatus and response processing by a server.
FIG. 18 is a flowchart illustrating connection processing.
FIG. 19 is a flowchart illustrating authentication processing.
FIG. 20 is a flowchart illustrating data transmission processing.
FIG. 21 is a flowchart illustrating data receipt processing.
FIG. 22 is a flowchart illustrating music playback processing.

### DESCRIPTION OF THE PREFERRED EMBODIMENTS

The following is a description of the preferred embodiments of the present invention exemplifying the corresponding relationship of the invention disclosed in this specification and the embodiments of the present invention. This description is to confirm that embodiments supporting the invention disclosed in this specification are disclosed in this specification. The content as disclosed in the embodiments of the invention corresponds to this invention. This by no means infers, however, that any embodiments not disclosed herein do not correspond to this invention. Conversely, embodiments disclosed here are taken to correspond to the invention but this does not mean that such embodiments do not correspond to inventions other than this invention.

Further, this disclosure as disclosed in this specification is by no means meant to represent the invention in its entirety. In other words, this disclosure is the invention as disclosed in this specification, and as such does not negate aspects of the invention not claimed in this application such as the future emergence of divisional applications, amendments, or additions to the invention.

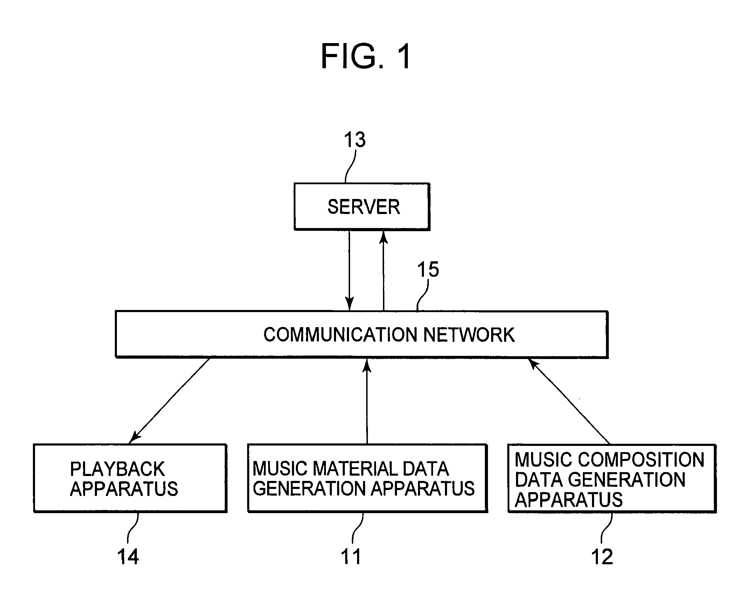

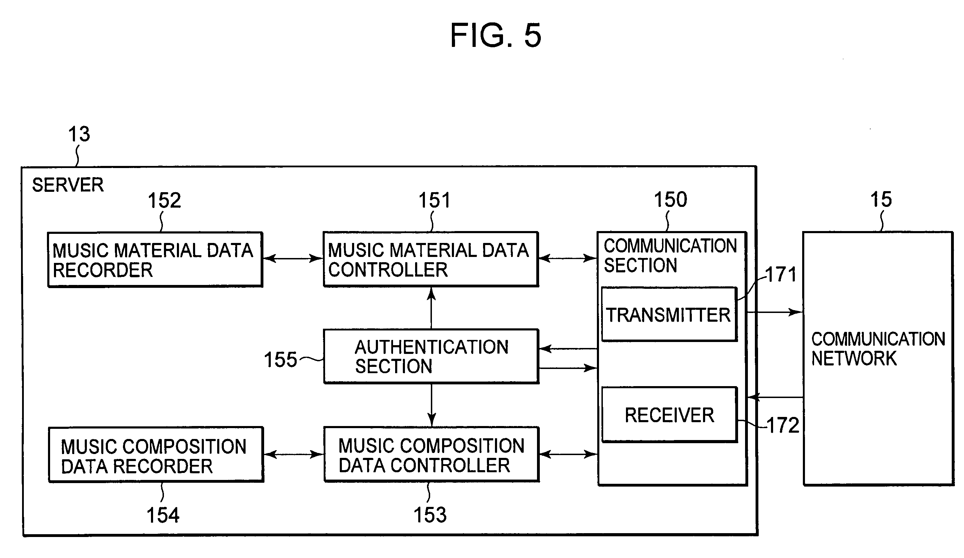

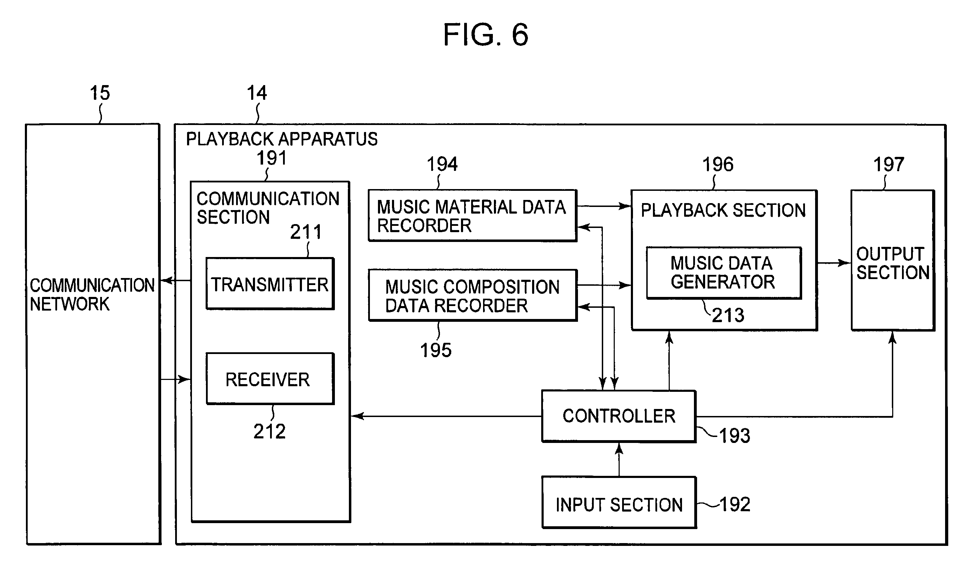

An information processing system according to an embodiment of the present invention includes a first information processing apparatus (for example, a server 13 of FIG. 1) and a second information processing apparatus (for example, a playback apparatus 14 of FIG. 1). The first information processing apparatus includes first storing means (for example, a music material data recorder 152 of FIG. 5) for storing music material data constituting music data for playing back music, second storing means (for example, a music component data recorder 154 of FIG. 5) for storing music composition data describing, for each item of the music material data, playback conditions for the music to be played back in accordance with the music data composed of one or a plurality of items of the music material data, and transmitting means (for example, a transmitter 171 of FIG. 5) for transmitting the music material data or the music composition data to the second information processing apparatus. The second information processing apparatus includes receiving means (for example, a receiver 212 of FIG. 6) for receiving the music material data or the music composition data transmitted from the first information processing apparatus, and music data generating means (for example, a music data generator 213 of FIG. 6) for generating the music data for playing back the music in accordance with the playback conditions described in the music composition data on the basis of the music material data and the music composition data.

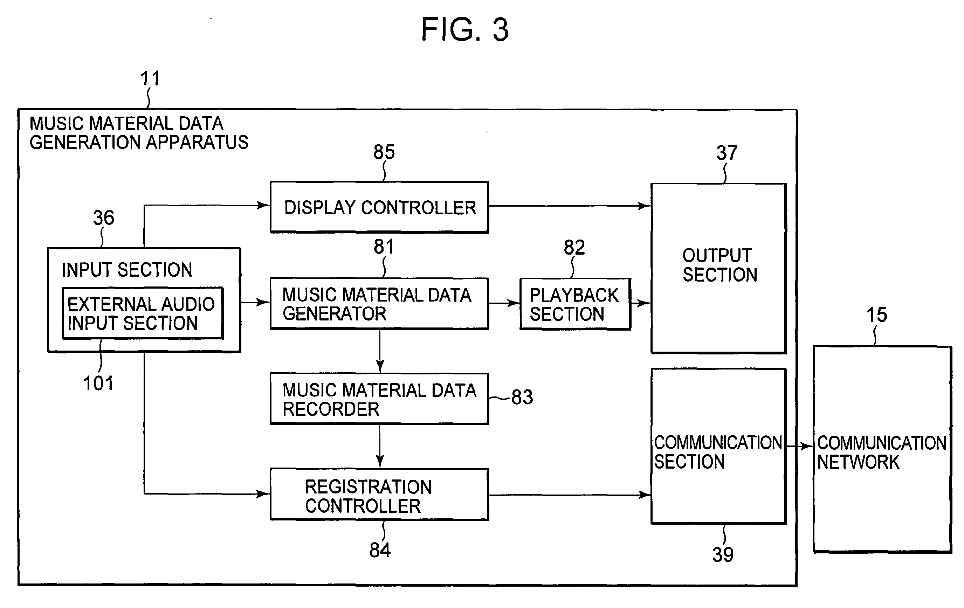

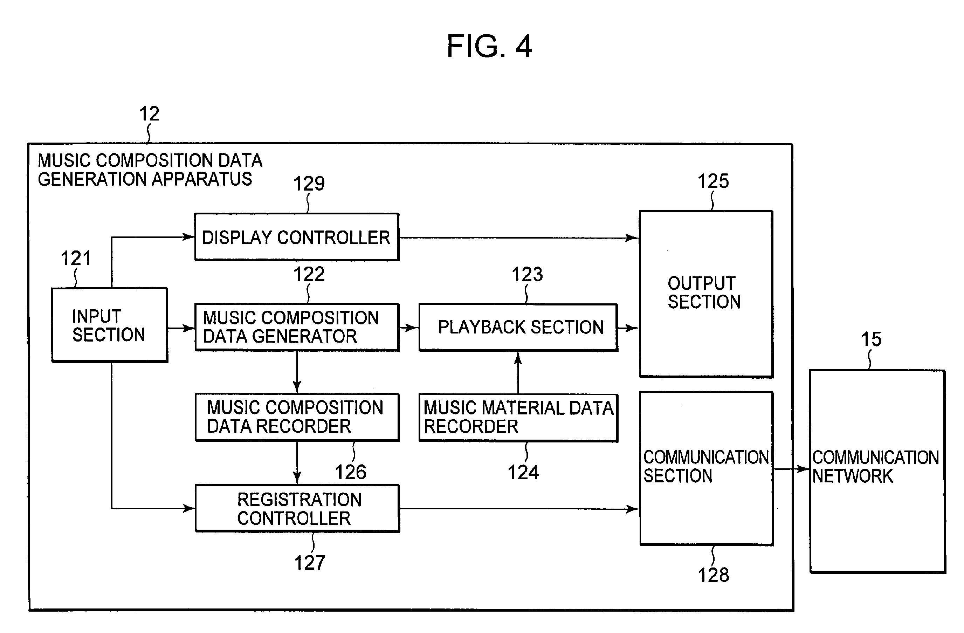

An information processing system according to another embodiment of the present invention includes a first information processing apparatus (for example, a music material data generating apparatus 11 of FIG. 1), a second information processing apparatus (for example, a music composition data generating apparatus 12 of FIG. 1), a third information processing apparatus (for example, a server 13 of FIG. 1) and a fourth information processing apparatus (for example, a playback apparatus 14 of FIG. 1). The first information processing apparatus includes music material data generating means (for example, a music material data generator 81 of FIG. 3) for generating music material data constituting music data for generating music, and first transmitting means (for example, a communication section 39) for transmitting the generated music material data to the third information processing apparatus. The second information processing apparatus includes music composition data generating means (for example, a music composition data generator 122 of FIG. 4) for generating music composition data describing, for each item of the music material data, playback conditions for the music to be played back in accordance with the music data composed of one or a plurality of items of the music element data, and second transmitting means (for example, a communication section 128 of FIG. 4) for transmitting the generated music composition data to the third information processing apparatus. The third information processing apparatus includes first receiving means (for example, a receiver 172 of FIG. 5) for receiving the music material data transmitted from the first information processing apparatus or the music composition data transmitted from the second information processing apparatus, storing means (for example, a music material data recorder 152 of FIG. 5) for storing the received music material data, second storing means (for example, a music composition data recorder 154 of FIG. 5) for storing the received music composition data, and third transmitting means (for example, a transmitter 171 of FIG. 5) for transmitting the music material data or the music composition data to the fourth information processing apparatus. The fourth information processing apparatus includes second receiving means (for example, a receiver 212 of FIG. 6) for receiving the music material data or the music composition data transmitted from the third information processing apparatus, and music data generating means (for example, a music data generator 213 of FIG. 6) for generating the music data for playing back the music in accordance with the playback conditions described in the music composition data on the basis of the music material data and the music composition data.

In the information processing system , the third transmitting means may be configured to transmit the music composition data or all music material data making up a single item of the music data to the fourth information processing apparatus.

In the information processing system, the music composition data generating means may be configured to generate the music composition data describing, for each item of the music material data, the playback conditions containing information indicating volume, sound quality and sound image localization, information between music tracks, mixing down information, and effect information.

In the information processing system, the first transmitting means may be configured to transmit to the third information processing apparatus first rights management information containing information indicating access rights, copying rights and editing rights for the music material data to be transmitted , the second transmitting means may be configured to transmit to the third information processing apparatus second rights management information containing information indicating access rights, copying rights and editing rights for the music composition data to be transmitted, the first receiving means may be configured to receive the first rights management information transmitted from the first information processing apparatus and the second rights management information transmitted from the second information processing apparatus, and the third transmitting means may be configured to transmit the music material data and the music composition data to the fourth information processing apparatus on the basis of the first rights management information and the second rights management information.

An information processing apparatus according to another embodiment of the present invention includes first storing means (for example, a music material data recorder 194 of FIG. 6) for storing music material data constituting music data for playing back music, second storing means (for example, a music composition data recorder 195 of FIG. 6) for storing music composition data describing, for each item of the music material data, playback conditions for the music to be played back in accordance with the music data composed of one or a plurality of items of the music material data, and music data generating means (for example, a music data generator 213 of FIG. 6) for generating the music data for playing back the music in accordance with the playback conditions described in the music composition data on the basis of the music material data and the music composition data.

In the information processing apparatus the second storing means may be configured to store the music composition data describing, for each item of the music material data, the playback conditions containing information indicating volume, sound quality and sound image localization, information between music tracks, mixing down information, and effect information.

In the information processing apparatus, the second storing means may be configured to store the music composition data for describing the playback conditions for the music to be played back in accordance with one item of the music material data.

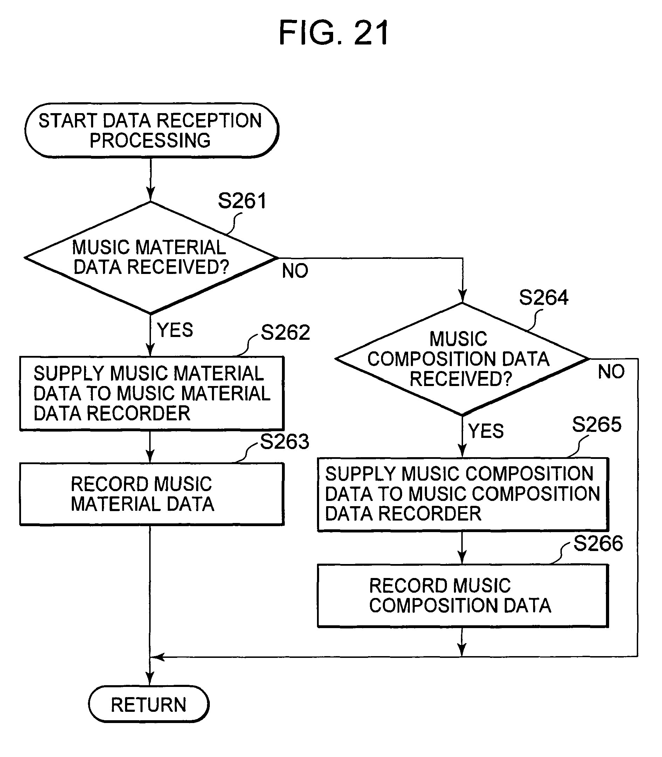

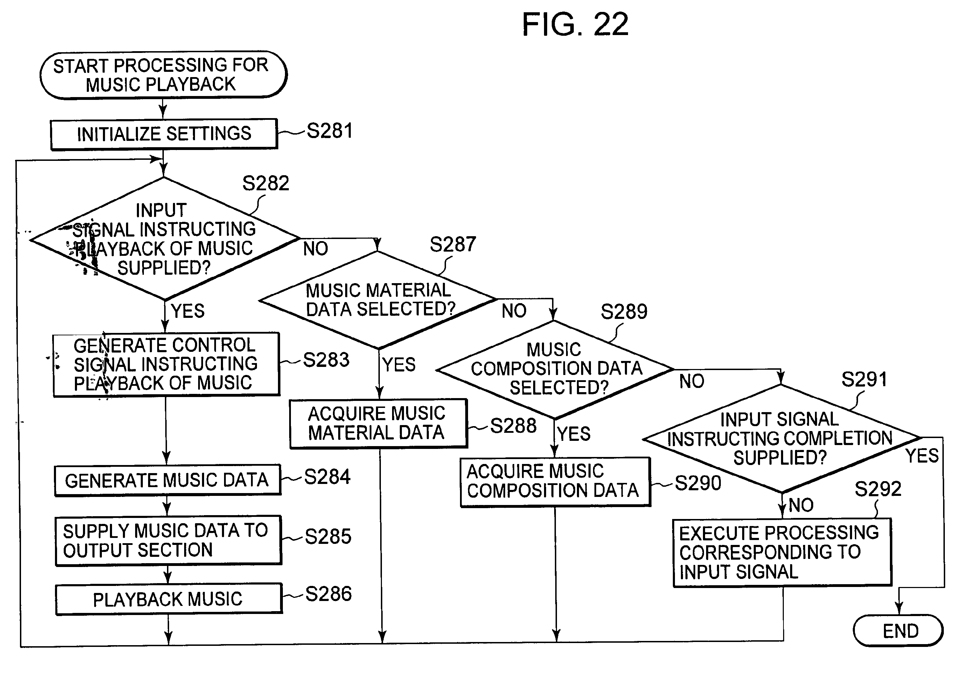

An information processing method according to another embodiment of the present invention includes a first storing step (for example, processing of step S263 of FIG. 21) of storing music material data constituting music data for playing back music, a second storing step (for example, processing of step S266 of FIG. 21) of storing music composition data describing, for each item of the music material data, playback conditions for the music to be played back in accordance with the music data composed of one or a plurality of items of the music material data, and a music data generating step (for example, processing of step S284 of FIG. 22) of generating the music data for playing back the music using the playback conditions described in the music composition data on the basis of the music material data and the music composition data.

A recording medium and a program according to other embodiments of the present invention involve fundamentally the same processing as disclosed for the above information processing method disclosed and repeated description is therefore omitted.

The present invention may also be applied to music distribution systems etc. for distributing music data via a communication network such as the Internet.

FIG. 1 is a view showing an embodiment of a music data distribution system to which the present invention is applied. In this music data distribution system, a music material data generating apparatus 11, a music composition data generating apparatus 12, a server 13, and a playback apparatus 14 are each connected to a communication network 15 such as the Internet etc.

The music material data generating apparatus 11 is constructed, for example, from a PC or from a dedicated terminal apparatus etc., generates music material data constituting music data for playing back music, and transmits the generated music material data to the server 13 via the communication network 15.

Details of the music material data are described in the following but the music material data is data (track data) for playing back one track of a performance for a piece of music recorded for each musical instrument such as vocals, drums, bass, guitar and keyboard etc. It is therefore possible to play back a track for vocals for a piece of music by playing back music on the basis of, for example, the music material data constituted by vocal track data. Further, it is also possible for a performance by the same instrument to be constituted by a plurality of items of the music material data.

The music composition data generating apparatus 12 is composed, for example, of a PC or a dedicated terminal apparatus etc., generates music composition data describing (setting) playback conditions for playing back music, and transmits the generated music composition data to the server 13 via the communication network 15.

Further, the details of the music composition data are described in the following, but the music composition data is data for setting, for each item of music material data, playback conditions for the music played back in accordance with the music data composed of one or a plurality of items of the music material data.

The communication network 15 is a transmission path constituted by wired or wireless communication lines, a network, or the Internet etc. for transmitting the music material data transmitted from the music material data generating apparatus 11 or the music composition data transmitted from the music composition data generating apparatus 12 to the server 13.

The server 13 is, for example, a PC or a dedicated server etc. and receives the music material data transmitted from the music material data generating apparatus 11 or the music composition data transmitted from the music composition data generating apparatus 12. The server 13 records (stores) the received music material data or music composition data.

When a request for distributing (transmitting) of the music material data or the music composition data comes from the playback apparatus 14, the server 13 transmits the recorded music material data or music composition data to the playback apparatus 14 via the communication network 15.

The communication network 15 transmits the music material data or the music composition data transmitted from the server 13 to the playback apparatus 14.

The playback apparatus 14 is composed of a PC or a mobile playback apparatus etc. and receives the music material data or the music composition data transmitted from the server 13. The playback apparatus 14 records (stores) the received music material data or music composition data.

The playback apparatus 14 plays back music on the basis of the recorded music material data and music composition data. Namely, the playback apparatus 14 plays back the music composed of one or a plurality of items of the music material data in accordance with the playback conditions described (set) in the music composition data designated by a user in accordance with the music data designated by the user.

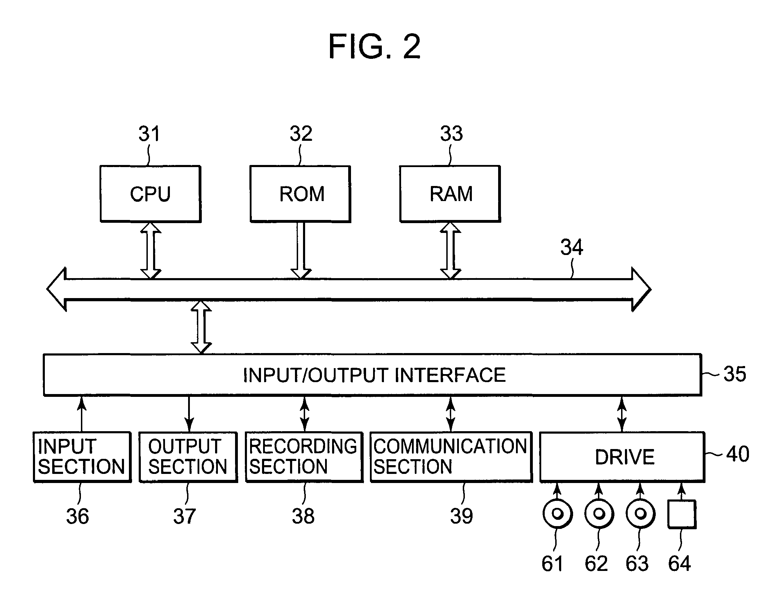

FIG. 2 is a block diagram showing an example configuration for the music material data generating apparatus 11. A Central Processing Unit (CPU) 31 executes various processing in accordance with programs stored in a Read Only Memory (ROM) 32 or a recording section 38. Programs and data etc. executed by the CPU 31 are appropriately stored in a Random Access Memory (RAM) 33. The CPU 31, the ROM 32 and the RAM 33 are connected to each other by a bus 34.

An input/output interface 35 is connected to the CPU 31 via the bus 34. An input section 36 made up of a keyboard, a mouse and a switch etc. and an output section 37 made up of a display, a speaker and a lamp etc. are connected to the input/output interface 35. The CPU 31 executes various processing corresponding to instructions inputted from the input section 36.

The recording section 38 connected to the input/output interface 35 is configured, for example, with a hard disc etc., and records therein programs to be executed by the CPU 31 and various data. A communication unit 39 communicates with external devices such as the server 13 etc. via the communication network 15 such as the Internet and other networks etc.

Further, the communication section 39 may also acquire programs via the communication network 15 and may record these programs in the recording section 38.

When a magnetic disk 61, an optical disc 62, a magneto-optical disc 63 or a semiconductor memory 64 is installed in a drive 40 connected to the input/output interface 35, the drive 40 drives it and acquires programs and data recorded therein. The acquired programs and data are transferred to the recording section 38 as necessary, and recorded.

The music composition data generating apparatus 12, the server 13, and the playback apparatus 14 are configured in the same manner as the music material data generating apparatus 11 and are therefore not described here.

FIG. 3 is a block diagram showing a configuration for functions of the music material data generating apparatus 11.

The music material data generating apparatus 11 is constructed so as to include the input section 36, the output section 37, the communication section 39, a music material data generator 81, a playback section 82, a music material data recorder 83, a registration controller 84 and a display controller 85.

The input section 36 comprises a keyboard, a mouse, and a switch etc. When a user operates the input section 36, an input signal corresponding to inputted instructions is generated, and the generated input signal is supplied to the music material data generator 81, the registration controller 84 and the display controller 85.

The input section 36 is equipped with an external audio input section 101. The external audio input section 101 of the input section 36 comprises a microphone and audio input terminals etc., acquires audio inputted from outside, and converts the acquired audio input to an audio signal constituted with an electrical signal. The external audio input section 101 of the input section 36 supplies converted audio signals to the music material data generator 81. The audio signals supplied to the music material data generator 81 are so-called analog signals.

When an input signal indicating generation of music material data is supplied by the input section 36, the music material data generator 81 generates the music material data according to the input signal. For example, the music material data generator 81 converts analog audio signals supplied from external equipment such as guitars and musical keyboards etc. via the input section 36 to digital audio data according to the input signals, and generates audio data by recording the converted audio data. The music material data generator 81 supplies generated music material data to the playback section 82 and the music material data recorder 83.

Although the music material data is described in detail later, for example, data for playing back music, a music material data Identification (ID) for specifying music material data, a music ID indicating the music data of which music the music material data constitutes, and a track ID specifying which instrument track data the music material data is for are contained in the music material data.

The playback section 82 generates the music data for playing back a piece of music on the basis of one or a plurality of items of the music material data supplied from the music material data generator 81. The playback section 82 decodes the generated music data using a prescribed format and supplies the decoded music data to the output section 37.

The output section 37 comprises a speaker, a display, and a lamp, etc. The output section 37 constituted with a speaker plays back music on the basis of the music data supplied by the playback section 82. Further, the output section 37 displays images on the basis of image data supplied by the display controller 85.

The music material data recorder 83 is constituted with a hard disk or a non-volatile semiconductor memory etc., and records the music material data supplied by the music material data generator 81. The music material data recorder 83 supplies the music material data having recorded therein to the registration controller 84.

The registration controller 84 determines whether or not an input signal indicating to register the music material data on the server 13 has been supplied by the input section 36. In a case where it is determined that an input signal indicating registration of the music material data in the server 13 has been supplied, the registration controller 84 generates rights management information for registering the music material data in the server 13.

Here, access rights information constituted with information specifying users allowed to access the music material data, copying rights information indicating whether or not it is allowed to download or copy the music material data, and editing rights information indicating whether or not processing of editing the music material data to give different music material data is allowed are contained in the rights management information.

Namely, the registration controller 84 refers to a preliminarily recorded registration information table in accordance with input signals supplied by the input section 36, sets access rights information, copying rights information, and editing rights information, and generates rights management information. The registration controller 84 acquires music material data designated by an input signal supplied by the input section 36 from the music material data recorder 83, and supplies the acquired music material data and the generated rights management information to the communication section 39. Although described in detail later, the registration information table contains information for setting access rights information, copying rights information, and editing rights information.

In a case where it is determined that an input signal indicating to register the music material data in the server 13 has not been supplied, the registration controller 84 does not generate rights management information.

The communication section 39 transmits and receives various types of data via the communication network 15. The communication section 39 transmits the music material data and the rights management information supplied by the registration controller 84 to the server 13 via the communication network 15.

When an input signal indicating displaying of information inputted by the user or music material data generation results etc. is supplied by the input section 36, the display controller 85 generates image data for displaying the information inputted by the user or the music material data generation results etc. The display control unit 85 then provides the generated image data to the output unit 37.

FIG. 4 is a block diagram showing a configuration for functions of the music composition data generating apparatus 12.

The music composition data generating apparatus 12 includes an input section 121, a music composition data generator 122, a playback section 123, a music material data recorder 124, an output section 125, a music composition data recorder 126, a registration controller 127, a communication section 128, and a display controller 129.

The input section 121 comprises a keyboard, a mouse, and a switch etc. When a user operates the input section 121, an input signal corresponding to inputted instructions is generated, and the generated input signal is supplied to the music composition data generator 122, the registration controller 127 and the display controller 129.

When an input signal indicating generation of music composition data is supplied by the input section 121, the music composition data generator 122 generates music composition data in accordance with the input signal. Although described in detail later, a music composition data ID specifying music composition data, a composition ID specifying a collection of music composition data describing (setting) music playback conditions, and a track ID specifying which musical instrument track data playback conditions the music composition data sets are contained in the music composition data.

The music composition data generator 122 determines whether or not a music ID is designated on the basis of an input signal supplied by the input section 121.

The music composition data generator 122 generates, in a case where it is determined that a music ID is designated, a signal indicating the designated music ID and supplies the generated signal indicating the music ID and the music composition data to the playback section 123. In a case where it is determined that a music ID is not designated, the music composition data generator 122 does not generate a signal indicating the music ID.

The playback section 123 acquires the music material data constituting the music data specified by the designated music ID from the music material data recorder 124 on the basis of the signal indicating the music ID supplied by the composition data generator 122.

The playback section 123 generates music data for playing back a piece of music on the basis of the acquired music material data and the music composition data supplied by the music composition data generator 122. Namely, the playback section 123 generates the music data for playing back the music in accordance with the playback conditions set in the music composition data on the basis of the music material data and the music composition data. The playback section 123 decodes the generated music data in conformity with a prescribed format and supplies the decoded music data to the output section 125.

The music material data recorder 124 records the music material data constituting the music data. The music material data recorder 124 supplies the music material data being recorded therein to the playback section 123.

The output section 125 comprises a speaker, a display, and a lamp, etc. The output section 125 functioning as a speaker plays back music on the basis of the music data supplied by the playback section 123. Further, the output section 125 displays images on the basis of image data supplied by the display controller 129.

The music composition data recorder 126 is constituted with a hard disk or a non-volatile semiconductor memory etc., and records the music composition data supplied by the music composition data generator 122. The music composition data recorder 126 supplies the music composition data being recorded therein to the registration controller 127.

The registration controller 127 determines whether or not an input signal indicating to record the music composition data on the server 13 has been supplied by the input section 121. In a case where it is determined that an input signal indicating to register the music composition data in the server 13 has been supplied, the registration controller 127 generates rights management information for registering the music composition data in the server 13.

Here, access rights information constituted with information specifying a user allowed to access the music composition data, copying rights information indicating whether or not it is allowed to download or copy the music composition data, and editing rights information indicating whether or not processing of editing the music composition data to give different music composition data is allowed are contained in the rights management information.

Namely, the registration controller 127 sets access rights information, copying rights information, and editing rights information in accordance with the input signals supplied by the input section 121, and generates rights management information. The registration controller 127 acquires the music composition data designated by an input signal supplied by the input section 121 from the music material data recorder 126, and supplies the acquired music composition data and the generated rights management information to the communication section 128.

In a case where it is determined that an input signal indicating registration of the music composition data in the server 13 has not been supplied, the registration controller 127 does not generate rights management information.

The communication section 128 transmits and receives various types of data via the communication network 15. The communication section 128 transmits the music composition data and rights management information supplied by the registration controller 127 to the server 13 via the communication network 15.

When an input signal indicating displaying of information inputted by the user or music composition data generation results etc. is supplied by the input section 121, the display controller 129 generates image data for displaying the information inputted by the user or the music composition data generation results etc. The display control unit 129 then provides the generated image data to the output unit 125.

FIG. 5 is a block diagram showing a functional configuration of the server 13.

The server 13 includes a communication section 150, a music material data controller 151, a music material data recorder 152, a music composition data controller 153, a music composition data recorder 154 and an authentication section 155.

The communication section 150 is equipped with a transmitter 171 for transmitting various types of data and a receiver 172 for receiving various types of data, and transmits and receives data via the communication network 15.

The transmitter 171 of the communication section 150 transmits the music material data supplied by the music material data controller 151 or the music composition data supplied by the music composition data controller 153 to the playback apparatus 14 via the communication network 15. Further, the transmitter 171 of the communication section 150 transmits a response signal indicating a request for transmission of a user ID and a password supplied by the authentication section 155 or a response signal indicating that a user has been authenticated to the playback apparatus 14 via the communication network 15.

The receiver 172 of the communication section 150 receives the music material data and rights management information transmitted from the music material data generating apparatus 11 and supplies the received music material data and rights management information to the music material data controller 151. The receiver 172 of the communication section 150 receives the music composition data and rights management information transmitted from the music composition data generating apparatus 12 and supplies the received music composition data and rights management information to the music composition data controller 153.

Further, the receiver 172 of the communication section 150 receives a connection request signal, an authentication request signal, and a transmission request signal transmitted from the playback apparatus 14 and supplies the received connection request signal, authentication request signal, and transmission request signal to the authentication section 155.

The music material data controller 151 records the same recording information table as the registration information table recorded by the music material data generating apparatus 11. The music material data controller 151 determines whether or not the communication section 150 has received the music material data and the rights management information.

The music material data controller 151 acquires the music material data and the rights management information from the communication section 150 in a case where it is determined that the communication section 150 has received the music material data and the rights management information. The music material data controller 151 refers to the recorded registration information table and adds rights management information to the music material data on the basis of the music material data and rights management information acquired from the communication section 150. The music material data controller 151 supplies the music material data with rights management information added thereto to the music material data recorder 152.

The music material data controller 151 does not acquire the music material data and the rights management information from the communication section 150 in a case where it is determined that the communication section 150 has not received the music material data and the rights management information.

When a transmission request signal is supplied by the authentication section 155, the music material data controller 151 determines whether or not the user specified by the user ID is a user to whom the requested music material data may be sent on the basis of the user ID and the music material data ID contained in the transmission request signal.

In a case where it is determined that the user specified by the user ID is a user to whom the requested music material data may be transmitted, the music material data controller 151 acquires the requested music material data from the music material data recorder 152 and supplies the acquired music material data to the communication section 150.

In a case where it is determined that the user specified by the user ID is not a user to whom the requested music material data may be transmitted, the music material data controller 151 does not acquire the music material data from the music material data recorder 152.

The music material data recorder 152 is constructed from a hard disk or a non-volatile semiconductor memory etc., and records the music material data supplied by the music material data controller 151. The music material data recorder 152 supplies the music material data being recorded therein to the music material data controller 151.

The music composition data controller 153 determines whether or not the communication section 150 has received the music composition data and the rights management information.

The music composition data controller 153 acquires the music composition data and the rights management information from the communication section 150 in a case where it is determined that the communication section 150 has received the music composition data and the rights management information. The music composition data controller 153 adds rights management information to the music composition data on the basis of the music composition data and rights management information acquired from the communication section 150. The music composition data controller 153 supplies the music composition data with the rights management information added thereto to the music component data recorder 154.

The music composition data controller 153 does not acquire the music composition data and the rights management information from the communication section 150 in a case where it is determined that the communication section 150 has not received the music composition data and the rights management information.

When a transmission request signal is supplied by the authentication section 155, the music composition data controller 153 determines whether or not the user specified by the user ID is a user to whom the requested music composition data may be transmitted, on the basis of the user ID and the music composition data ID contained in the transmission request signal.

In a case where it is determined that the user specified by the user ID is a user to whom the requested music composition data may be transmitted, the music composition data controller 153 acquires the requested music composition data from the music component data recorder 154 and supplies the acquired music composition data to the communication section 150.

In a case where it is determined that the user specified by the user ID is not a user to whom the requested music composition data may be transmitted, the music composition data controller 153 does not acquire the music composition data from the music component data recorder 154.

The music composition data recorder 154 is constituted with a hard disk or a non-volatile semiconductor memory etc., and records the music composition data supplied by the music composition data controller 153. The music component data recorder 154 supplies the music material data being recorded therein to the music composition data controller 153.

When a connection request signal is supplied by the communication section 150, the authentication section 155 carries out authentication processing. Namely, when a connection request signal is supplied by the communication section 150, the authentication section 155 generates a response signal requesting transmission of a user ID and a password in order to carry out processing to determine whether or not the user sending the connection request signal is a legitimate user. The authentication section 155 supplies the generated response signal indicating a request for transmission of the user ID and password to the communication section 150.

Further, when an authentication request signal is supplied by the communication section 150, the authentication section 155 carries out processing to determine whether or not the user transmitting the connection request signal is a legitimate user on the basis of the user ID and the password. When the user is authenticated as a legitimate user, the authentication section 155 generates a response signal indicating that the user is authenticated as the legitimate user, and the generated response signal indicating that the user is authenticated as the legitimate user is supplied to the communication section 150.

When a transmission request signal is supplied by the communication section 150, the authentication section 155 determines whether or not the supplied transmission request signal is a transmission request signal indicating a request for transmission of the music material data. In a case where it is determined that the transmission request signal is a transmission request signal indicating a request for transmission of the music material data, the authentication section 155 supplies the supplied transmission request signal to the music material data controller 151.

In a case where it is determined that the transmission request signal is not a transmission request signal indicating a request for transmission of the music material data, the authentication section 155 determines whether or not the supplied transmission request signal is a transmission request signal indicating a request for transmission of the music composition data.

In a case where it is determined that the transmission request signal is a transmission request signal indicating a request for transmission of the music composition data, the authentication section 155 supplies the supplied transmission request signal to the music composition data controller 153. In a case where it is determined that the transmission request signal is not a transmission request signal indicating a request for transmission of the music composition data, the authentication section 155 does not supply the supplied transmission request signal to the music composition data controller 153.

FIG. 6 is a block diagram showing a functional configuration of the playback apparatus 14.

The playback apparatus 14 contains a communication section 191, an input section 192, a controller 193, a music material data recorder 194, a music composition data recorder 195, a playback section 196, and an output section 197.

The communication section 191 is equipped with a transmitter 211 for transmitting various types of data and a receiver 212 for receiving various types of data, and transmits and receives data via the communication network 15.

The transmitter 211 of the communication section 191 transmits connection request signals, authentication request signals, or transmission request signals provided by the controller 193 to the server 13 via the communication network 15.

The receiver 212 of the communication section 191 receives the music material data, the music composition data, response signals indicating requests for transmission of user IDs and passwords, or response signals indicating that a user has been authenticated transmitted from the server 13 and supplies the received music material data, music composition data, response signals indicating requests for transmission of user IDs and passwords, or response signals indicating that a user has been authenticated to the controller 193.

The input section 192 comprises a keyboard, a mouse, and a switch etc. When a user operates the input section 192, an input signal corresponding to inputted instructions is generated, and the generated input signal is supplied to the controller 193.

When an input signal indicating downloading of the music material data or the music composition data is supplied by the input section 192, the controller 193 generates a connection request signal indicating a request for a connection to the server 13 and the generated connection request signal is supplied to the communication section 191.

When a response signal indicating a request for transmission of a user ID and a password is supplied by the communication section 191, the controller 193 generates an authentication request signal indicating a request for authentication of a user, including a user ID and a password, in accordance with the input signal from the input section 192. The controller 193 then supplies the generated authentication request signal to the communication section 191.

When a response signal indicating authentication is supplied by the communication section 191, the user has been authenticated as a legitimate user. The controller 193 then generates a transmission request signal indicating a request for transmission of the music material data or the music composition data in accordance with an input signal from the input section 192 and the generated transmission request signal is supplied to the communication section 191. More specifically, in a case where a transmission request signal indicating a request for transmission of the music material data is generated, the controller 193 generates a transmission request signal containing a music material data ID specifying music material data designated by the user ID and the input signal from the input section 192.

Further, in a case where a transmission request signal indicating a request for transmission of the music composition data is generated, the controller 193 generates a transmission request signal containing a music composition data ID specifying music composition data designated by the user ID and the input signal from the input section 192.

The controller 193 supplies the music material data supplied by the communication section 191 to the music material data recorder 194. Further, the controller 193 supplies the music composition data supplied by the communication section 191 to the music composition data recorder 195.

When a music playback application program is started up, the controller 193 carries out initialization setting required in processing for music playback. When an input signal indicating playback of the music containing a composition ID and a music ID is supplied by the input section 192, the controller 193 generates a control signal indicating playback of the music containing the composition ID and the music ID and supplies the generated control signal to the playback section 196.

When an input signal indicating selection of the music material data containing a music material data ID is supplied from the input section 192, the controller 193 generates a control signal indicating acquisition of the designated music material data, and the generated control signal is supplied to the playback section 196. Further, when an input signal indicating selection of the music composition data containing a music composition data ID is supplied from the input section 192, the controller 193 generates a control signal indicating acquisition of the designated music composition data, and the generated control signal is supplied to the playback section 196.

Further, when an input signal instructing stopping, fast forwarding or rewinding etc. of music playback is supplied by the input section 192, the controller 193 generates a control signal in accordance with this instruction and supplies the generated control signal to the playback section 196.

The music material data recorder 194 comprises a hard disk or a non-volatile semiconductor memory etc., and records the music material data supplied by the controller 193. The music material data recorder 194 supplies the music material data being recorded therein to the playback section 196.

The music composition data recorder 195 comprises a hard disk or a non-volatile semiconductor memory etc., and records the music composition data supplied by the controller 193. The music composition data recorder 195 supplies the music composition data being recorded therein to the playback section 196.

When a control signal indicating acquisition of the music material data is supplied by the controller 193, the playback section 196 acquires the designated music material data from the music material data recorder 194 and temporarily holds the acquired music material data. When a control signal indicating acquisition of the music composition data is supplied by the controller 193, the playback section 196 acquires the designated music composition data from the music composition data recorder 195 and temporarily holds the acquired music composition data.

When a control signal indicating playback of music containing a composition ID and a music ID is supplied by the controller 193, the playback section 196 acquires the music material data containing the music ID specified by the control signal from the music material data recorder 194. Further, the playback section 196 acquires the music composition data containing the composition ID designated by the control signal from the music composition data recorder 195.

More specifically, in a case where the playback section 196 does not hold the music material data containing the music ID designated by the control signal, the playback section 196 acquires the music material data from the music material data recorder 194. The music material data is not acquired in the event that the music material data containing the music ID designated by the control signal is held. Similarly, the playback section 196 acquires the music composition data from the music composition data recorder 195 in a case where it does not hold the music composition data containing the composition ID designated by the control signal, and does not acquire the music composition data in a case where it holds the music composition data containing the composition ID designated by the control signal.

The playback section 196 is equipped with a music data generator 213. When a control signal indicating playback of the music containing the composition ID and the music ID is supplied by the controller 193, the music data generator 213 of the playback section 196 generates music data for playing back music in accordance with playback conditions set in the music composition data on the basis of the music material data containing the designated music ID and the music composition data containing the designated composition ID.

The playback section 196 decodes the music data generated by the music data generator 213 of the playback section 196 in conformity with a prescribed format, and supplies the decoded music data to the output section 197. When a control signal instructing stopping, fast forwarding or rewinding etc. of music playback is supplied by the controller 193, the playback section 196 executes processing as designated by this control signal.

The output section 197 comprises a speaker, a display, and a lamp, etc. The output section 197 functioning as a speaker plays back music on the basis of the music data supplied by the playback section 196. Further, the output section 197 displays images on the basis of image data supplied by the controller 193.

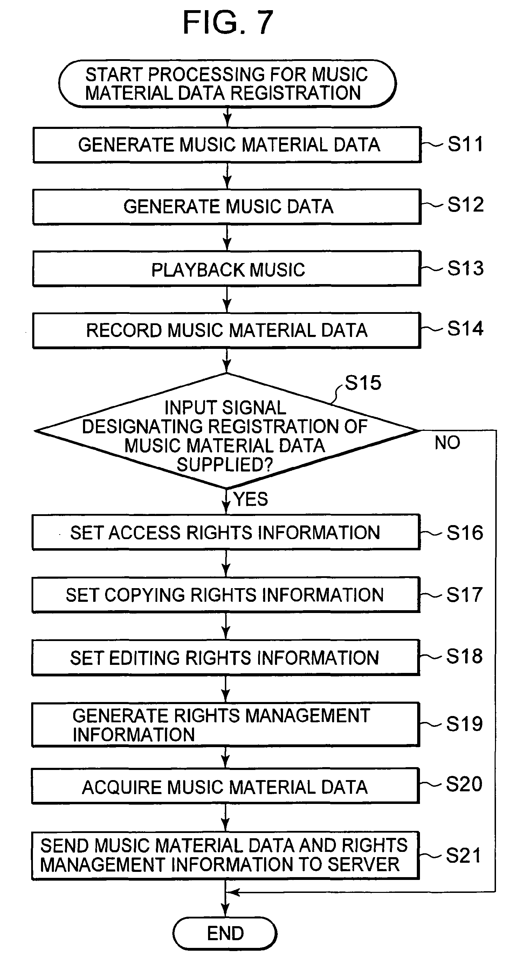

Next, a description is given with reference to a flowchart of FIG. 7 of music material data registration processing by the music material data generating apparatus 11.

In step S11, the music material data generator 81 generates music material data on the basis of an input signal supplied by the input section 36 and supplies the generated music material data to the playback section 82 and the music material data recorder 83.

For example, in step S11, the music material data generator 81 converts analog audio signals supplied from external equipment such as guitars and musical keyboards etc. via the external audio input section 101 of the input section 36 to digital audio data and generates audio data by recording the converted audio data.

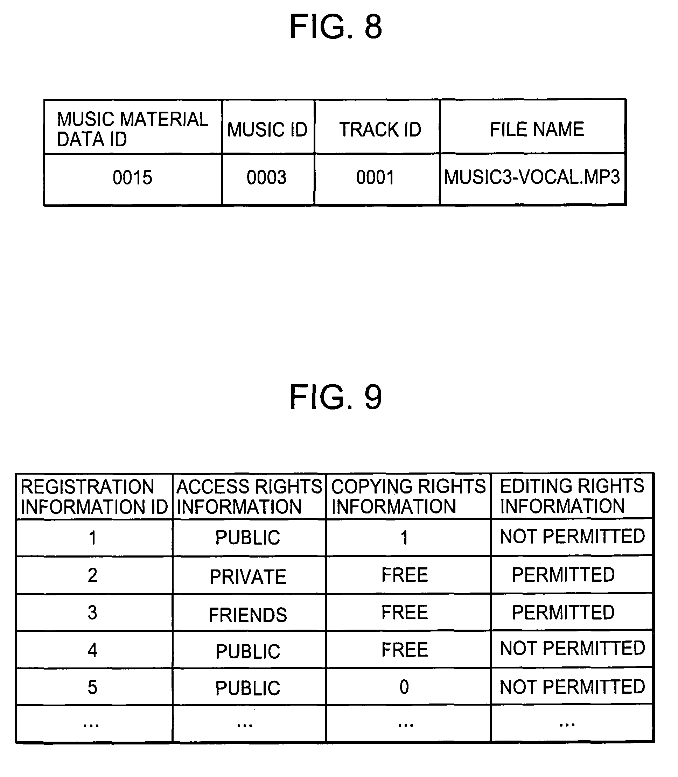

FIG. 8 is a view illustrating the music material data.

The music material data may include, for example, data for playing back music, a music material data ID "0015" for specifying the music material data, a music ID "0003" indicating which music data of which piece of music is composed of the music material data, a track ID "0001" indicating which instrument track data the music material data is for, and a music material data file name "music3-vocal.mp3".

Here, the track ID is set in advance, for example, for each track data instrument. Therefore, for example, music material data of a track ID "0001" may be music material data constituted by vocal track data, music material data of a track ID "0003" may be music material data constituted by piano track data, music material data of a track ID "0006" may be music material data constituted by guitar track data, and music material data of a track ID "0012" may be music material data constituted by drum track data.

Further, for example, in the music material data file name "music3-vocal.mp3", "music3" shows that the music ID is "0003", "vocal" shows that the music material data is vocal track data, and the extension "mp3" shows that the music material data is MP3 (MPEG (Moving Picture Experts Group) 1 Audio Layer 3) format data.

For example, the music material data shown in FIG. 8 is therefore vocal track data in MP3 format data of music material data ID of "0015", and constituted of music data for a piece of music of the music ID "0003".

Returning to the description of the flowchart of FIG. 7, in step S12, the playback section 82 generates the music data for playing back a piece of music on the basis of one or a plurality of items of the music material data supplied from the music material data generator 81. The playback section 82 decodes the generated music data using a prescribed format and supplies the decoded music data to the output section 37.

For example, in step S12, the playback section 82 generates the music data for playing back a piece of music of the music ID "0003" on the basis of one or a plurality of items of the music material data containing the music ID "0003" of the music material data supplied by the music material data generator 81. The playback section 82 decodes generated music data in conformity with a format such as, for example, MP3 or WAV etc. and supplies the decoded music data to the output section 37.

The playback section 82 may also provide a single item of the music material data to the output section 37 without generating the music data.

In step S13, the output section 37 functioning as a speaker plays back music on the basis of the music data supplied by the playback section 82.

In step S14, the music material data recorder 83 records the music material data supplied by the music material data generator 81.

In step S15, the registration controller 84 determines whether or not an input signal indicating registration of the music material data has been supplied by the input section 36.

In step S15, in a case where it is determined that an input signal indicating to register the music material data has been supplied from the input section 36, the process goes to step S16, and the registration controller 84 sets access rights information according to an input signal supplied by the input section 36.

For example, the registration controller 84 refers to the registration information table shown in FIG. 9 and sets access rights information according to the input signal supplied by the input section 36.

Here, a registration information ID specifying registration information, access rights information constituted with information specifying a user allowed to access the music material data, copying rights information indicating whether or not it is allowed to download or copy the music material data, and editing rights information indicating whether or not processing of editing the music material data to give different music material data is allowed are contained in the registration information table.

Here, the registration information contained in the registration information table sets the access rights information to any one of "public", "friends", and "private". Namely, music material data with "public" set as access rights information is music material data that can be accessed by all users, music material data with access rights information set to "friends" is music material data that can only be accessed by specific users set by a user who generated the music material data, and music material data with access rights information set to "private" is music material data that can only be accessed by the user who generated the music material data.

Further, the number of times copying is allowed is set in the copying rights information in the registration information contained in the registration information table. Namely, for example, music material data with "0" set to the copying rights information is music material data that cannot be downloaded, music material data with copying rights information set to "1" is music material data that can be copied through downloading one time but cannot be copied to apparatus other than the apparatus performing the download, music material data with copying rights information set to "4" can be copied to three other apparatus after downloading, i.e., after being copied once, and music material data with copying rights information set to "free" is music material data that can be downloaded and copied.

Further, the registration information contained in the registration information table sets the editing rights information to either of "permitted" or "not permitted". Namely, music material data with editing rights information set to "permitted" is music material data that can be edited to be processed to different music material data, and music material data with editing rights information set to "not permitted" is music material data that cannot be edited and processed to different music material data.

In the example in FIG. 9, registration information of a registration ID "1" has access rights information set to "public", copying rights information set to "1", and editing rights information set to "not permitted". Further, registration information of a registration ID "2" has access rights information set to "private", copying rights information set to "free", and editing rights information set to "permitted".

Similarly, registration information of a registration ID "3" has access rights information set to "friends", copying rights information set to "free" and editing rights information set to "permitted". Registration information of a registration ID "4" has access rights information set to "public", copying rights information set to "free" and editing rights information set to "not permitted". Moreover, registration information of a registration ID "5" has access rights information set to "public", copying rights information set to "0", and editing rights information set to "not permitted".

For example, the registration controller 84 refers to the registration information table and generates rights management information containing a registration information ID. It is also possible to set the copying rights information and the editing rights information for each user in such a manner that, for example, copying rights information is set to "free" for users that are members, and copying rights information is set to "0" for general users, etc.

Returning to the description of the flowchart of FIG. 7, in step S16 for example, the registration controller 84 refers to the registration information table shown in FIG. 9 and sets the access rights information to any one of "public", "friends" and "private" in accordance with the input signal supplied by the input section 36.

In step S17, the registration controller 84 sets copying rights information in accordance with an input signal supplied by the input section 36. For example, in step S17, the registration controller 84 refers to the registration information table shown in FIG. 9 and sets the number of times copying is allowed to the copying rights information according to the input signal supplied by the input section 36.

In step S18, the registration controller 84 sets editing rights information in accordance with an input signal supplied by the input section 36. For example, in step S18, the registration controller 84 refers to the registration information table shown in FIG. 9 and sets either of "permitted" or "not permitted" to the editing rights information according to the input signal supplied by the input section 36.

Namely, in step S19, the registration controller 84 generates rights management information on the basis of the set access rights information, copying rights information, and editing rights information in accordance with the input signals supplied by the input section 36. Namely, in this case, one item of rights management information is generated for one item of the music material data. For example, in step S19, the registration controller 84 generates rights management information containing a user ID specifying a user (user operating the music material data generating apparatus 11) for which a registration information ID and for which music material data has been generated on the basis of the access rights information, copying rights information and editing rights information set in accordance with the input signal supplied by the input section 36.

Therefore, in a case, for example, where the access rights information is set to "public", the copying rights information is set to "1" and the editing rights information is set to "not permitted", the registration controller 84 generates rights management information containing a registration information ID of "1" and a user ID for a user who generated the music material data.

In step S20, the registration controller 84 acquires the music material data designated by an input signal supplied by the input section 36 from the music material data recorder 83, and supplies the acquired music material data and the generated rights management information to the communication section 39.

In step S21, the communication section 39 transmits the music material data and rights management information supplied by the registration controller 84 to the server 13 via the communication network 15 and the music material data recording processing is completed.

The communication section 39 may transmit the music material data and music material data rights management information containing the same music ID to the server 13 collectively or may simply transmit one item of the music material data and the music material data rights management information to the server 13 at a time.

On the other hand, in a case where it is determined in step S15 that an input signal indicating to register the music material data is not supplied by the input section 36, the music material data is not registered on the server 13. The processing from step S16 to step S21 is therefore skipped and the music material data registration processing is completed.

The music material data generating apparatus 11 then registers the music material data in the server 13 by generating the music material data and the rights management information and transmitting the generated music material data and the rights management information to the server 13 via the communication network 15.

By generating one item of the rights management information in correspondence to one generated item of the music material data in this manner, it is possible for a user who generates the music material data to set access rights information, copying rights information and editing rights information for each item of music material data. It is therefore possible for a user to determine whether or not to register the generated music material data after listening to tracks corresponding to the generated music material data by playing back the music (tracks) on the basis of the generated music material data.

A description is given where the music material data generator 81 supplies the generated music material data to the music material data recorder 83, but it is also possible for the music material data generator 81 to supply the music material data to the music material data recorder 83 after receiving an input signal indicating recording of the music material data from the input section 36 to the music material data generator 81.

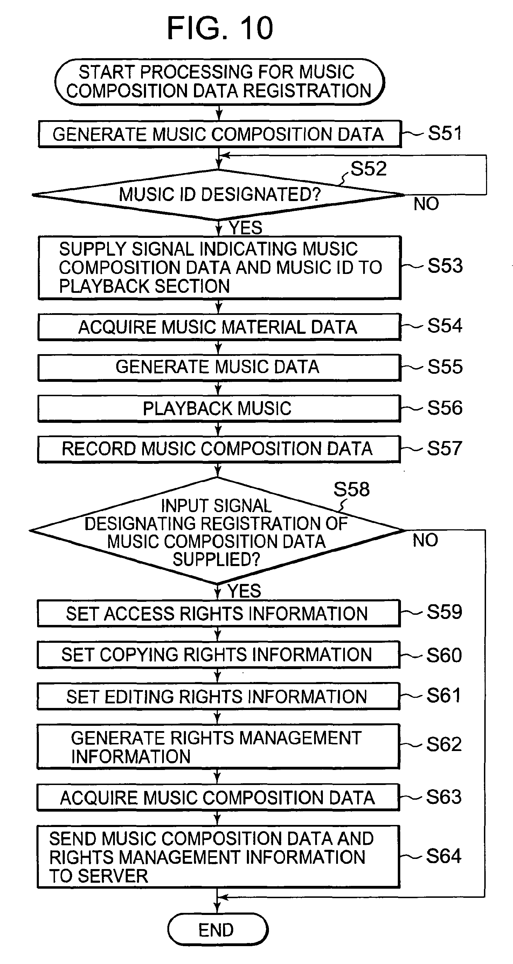

Next, a description is given with reference to a flowchart of FIG. 10 of music composition data registration processing by the music composition data generating apparatus 12.

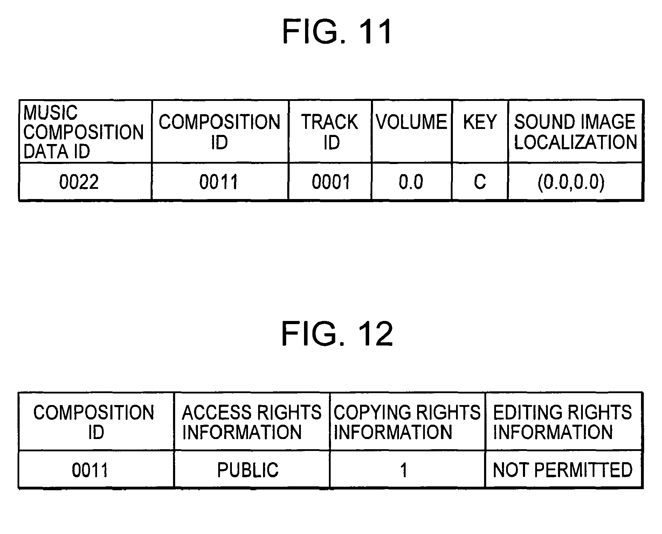

In step S51, the music composition data generator 122 generates the music composition data on the basis of an input signal supplied by the input section 121. For example, in step S51, the music composition data generator 122 generates the music composition data as shown in FIG. 11 on the basis of an input signal supplied by the input section 121.

For example, the music composition data may include a music composition data ID "0022" specifying music composition data, a composition ID "0011" specifying a set of items of music composition data setting playback conditions for a piece of music, a track ID "0001" specifying the track data playback conditions for which piece of music the music composition data specifies, volume "0.0" at the time of playback of the track, a key (key) "C" for the time of playback of the track, and sound image localization (0.0, 0.0) expressing the position of a sound image.

Here, composition ID "0011" expresses a set of music composition data setting playback conditions for a piece of music. Playback conditions for a piece of music are decided by one or a plurality of items of the music composition data containing a composition ID of "0011".

For example, in a case where a user designates the composition ID "0011" so as to play back a piece of music, music composition data containing the music composition data ID "0022" shown in FIG. 11 decides playback conditions for music material data containing a track ID of "0001" from among music material data constituting the music data of a piece of music to be played back.

Further, a volume "0.0" expresses that the volume of the track played back using the music material data is made 0 times louder. In this case, the volume at the time of playback of tracks played back using the music material data containing the track ID "0001" is taken to be "0" regardless of the volume of the track set in advance. Similarly, in a case where, for example, the volume is "2.0", the corresponding track is played back at a volume two times louder than the volume set in advance for the track.

Further, a key "C" indicates a key the track is to be played back in. Namely, in this case, a track played back using the music material data containing a track ID of "0001" is played back in the key of "C".

Further, the sound image localization (0.0, 0.0) indicates, for example, sound image localization centered on a user. For example, this expresses the position of coordinates in a two-dimensional coordinate system constituted by a mutually orthogonal x axis and y axis centered on a user. Therefore, in this case, the sound image localization (0.0, 0.0) indicates sound image localization where a sound source is at the position of the user. Further, for example, sound image localization (1.0, 0.0) indicates a sound source to the right of the user, and sound image localization (0.0, 1.0) indicates sound image localization where a sound source is to the front of a user.

Further, the sound image localization may be not only data expressing the position of a fictitious sound source but may also have data expressing directivity of a fictitious sound source. For example, it is possible to define sound conveyed in a direction from the front of the user to the right of the user by adding data expressing directivity of a fictitious sound source.

Sound composition data specified by a music composition ID "0022" is data for setting track playback conditions for playing back using the music material data containing a track ID of "0001" from among music material data constituting music data for a piece of music to volume "0.0", key "C", and sound image localization "(0.0, 0.0)".

Returning to the description of the flowchart of FIG. 10, in step S52, the music composition data generator 122 determines whether or not a music ID is designated on the basis of the input signal supplied by the input section 121.

In step S52, in a case where it is determined that a music ID is not specified, the process goes back to step S52, and the determination process is repeated until it is determined that a music ID is designated.

On the other hand, in step S52, in a case where it is determined that a music ID is designated, the process proceeds to step S53, and the music composition data generator 122 supplies a signal indicating the generated music ID and music composition data to the playback section 123. Further, the music composition data generator 122 supplies the generated music composition data to the music composition data recorder 126. In step S52, in a case where it is determined that a music ID has not been designated even after a lapse of a prescribed period of time, a signal indicating a preset music ID is generated, and a signal indicating the generated music ID and music composition data are supplied to the playback section 123.

In step S54, the playback section 123 acquires the music material data containing the specified music ID from the music material data recorder 124 on the basis of a signal indicating the music ID supplied by the composition data generator 122.

In step S55, the playback section 123 generates music data for playing back music using the playback conditions set in the music composition data on the basis of the music composition data supplied by the composition data generator 122 and the music material data acquired from the music material data recorder 124. The playback section 123 decodes the generated music data in conformity with a prescribed format and supplies the decoded music data to the output section 125.

For example, in step S55, the playback section 123 generates music data for playing back a piece of music of a music ID "0003" using the playback conditions set in the music composition data containing a composition ID "0011" on the basis of one or a plurality of items of the music composition data containing the composition ID "0011" supplied by the music composition data generator 122 and one or a plurality of items of the music material data containing the music ID "0003" acquired from the music material data recorder 124. The playback section 123 decodes the generated music data using a format such as, for example, MP3 or WAV etc. and supplies the decoded music data to the output section 125.

A description is given where music data for playing back a piece of music is generated on the basis of the music composition data but it is also possible to generate data for one track on the basis of one item of the music composition data and the music composition data containing the same track ID as the track ID contained in the music composition data.

In step S56, the output section 125 functioning as a speaker plays back the music on the basis of the music data supplied by the playback section 123.

In step S57, the music composition data recorder 126 records the music composition data supplied by the composition data generator 122.

In step S58, the registration controller 127 determines whether or not an input signal indicating registration of the music composition data has been supplied by the input section 121.

In step S58, in a case where it is determined that an input signal indicating registration of the music composition data has been supplied from the input section 121, the process proceeds to step S59, and the registration controller 127 sets access rights information in accordance with the input signal supplied by the input section 121.

For example, in step S59, the registration controller 127 sets the access rights information to any one of "public", "friends" and "private" in accordance with the input signal supplied by the input section 121. Here, music composition data with "public" set as access rights information is music composition data that can be accessed by all users, music composition data with access rights information set to "friends" is music composition data that can only be accessed by specific users set by a user who generated the music composition data, and music composition data with access rights information set to "private" is music composition data that can only be accessed by the user who generated the music composition data.

More specifically, the registration controller 127 sets the access rights information for every item of music composition data containing the composition ID. Namely, in this case, the same access rights information is set to the music composition data containing the same composition ID.

In step S60, the registration controller 127 sets copying rights information in accordance with the input signal supplied by the input section 121. For example, in step S60, the registration controller 127 sets the number of times copying is allowed to the copying rights information in accordance with the input signal supplied by the input section 121.

Here, for example, music composition data with "0" set to the copying rights information is music composition data that cannot be downloaded, music composition data with copying rights information set to "1" is music composition data that can be copied through downloading once but cannot be copied to apparatus other than the apparatus performing the download, music composition data with copying rights information set to "4" can be copied to three other apparatus after downloading, i.e. after being copied once, and music composition data with copying rights information set to "free" is music composition data that can be downloaded and copied.

More specifically, the registration controller 127 sets the copying rights information for every item of the music composition data containing the composition ID. Namely, in this case, the same copying rights information is set to the music composition data containing the same composition ID.

In step S61, the registration controller 127 sets editing rights information in accordance with the input signal supplied by the input section 121. For example, in step S61, the registration controller 127 sets the editing rights information to either of "permitted" or "not permitted" in accordance with the input signal supplied by the input section 121.

Music composition data with editing rights information set to "permitted" is music composition data that can be edited to be processed to different music composition data, and music composition data with editing rights information set to "not permitted" is music composition data that cannot be edited and processed to different music composition data.

More specifically, the registration controller 127 sets the editing rights information for every item of the music composition data containing the composition ID. Namely, in this case, the same editing rights information is set to the music composition data containing the same composition ID.

Namely, in step S62, the registration controller 127 generates rights management information on the basis of the set access rights information, copying rights information, and editing rights information in accordance with the input signal supplied by the input section 121. Namely, in this case, one item of rights management information is generated for the music composition data containing the same composition ID. For example, in step S62, the registration controller 127 generates the rights management information shown in FIG. 12 in accordance with an input signal supplied by the input section 121.

The rights management information contains a composition ID, access rights information, copying rights information, editing rights information, and a user ID specifying the user that generated the music composition data. Namely, in this case, the registration controller 127 generates rights management information with a composition ID of "0011", the access rights information set to "public", copying rights information set to "1", and editing rights information set to "not permitted".

In step S63, the registration controller 127 acquires the music composition data designated by the input signal supplied by the input section 121 from the music material data recorder 126, and supplies the acquired music composition data and the generated rights management information to the communication section 128.

In step S64, the communication section 128 sends the music composition data and rights management information supplied by the registration controller 127 to the server 13 via the communication network 15, and the music composition data recording processing is completed. For example, in step S64, the communication section 128 sends one or a plurality of items of the music composition data containing the same composition ID and the rights management information containing the same composition ID as the composition ID contained in the music composition data to the server 13 via the communication network 15.

On the other hand, in a case where it is determined in step S58 that an input signal indicating registration of the music composition data is not supplied by the input section 121, the music composition data is not registered on the server 13. The processing from step S59 to step S64 is therefore skipped and the music composition data registration processing is completed.

The music composition data generating apparatus 12 then registers the music composition data in the server 13 by generating the music composition data and the rights management information and transmitting the generated music composition data and rights management information to the server 13 via the communication network 15.

By generating one item of the rights management information for the generated music composition data in this manner, it is possible for a user who generated the music composition data to set access rights information, copying rights information and editing rights information. It is therefore possible for the user to determine whether or not to register the generated music composition data after listening to music in accordance with the playback conditions set by the generated music composition data by playing back the music on the basis of the generated music composition data.

Further, the user can listen to the music with an ambience corresponding to the user's condition and preferences by setting playback conditions for each of the items of the music material data constituting the music data. Further, with the music composition data, by setting the playback conditions for each item of the music composition data, it is possible to set the sound image localization in such a manner that, for example, the vocals are positioned centrally, the guitar is positioned to the right, the bass is positioned to the left, and the drums are positioned to the rear thereof and the user can then enjoy music that sounds spatially broad.

A description is given where the music composition data generator 122 supplies generated music composition data to the music composition data recorder 126, but it is also possible for the music composition data generator 122 to supply the music composition data to the music composition data recorder 126 from the input section 121 when an input signal indicating recording of the music composition data is supplied to the music composition data generator 122.

Further, a description is given of setting the sound image localization using a two-dimensional coordinate system but setting in a three-dimensional coordinate system is also possible. Further, a description is given of setting the volume, key and sound image localization for music composition data but in addition to this, it is also possible to set tracking down information such as whether to output multi-track data as a two-channel output or 5.1 channel output, information indicating sound quality, information between music tracks, or effects information such as reverb (reverberation) or delay etc.

Further, by setting parameters expressing time in the music composition data, it is possible to change settings for volume and sound image localization in a temporal direction to perform fade in or fade out, or to cause sound image localization to move with the passage of time.

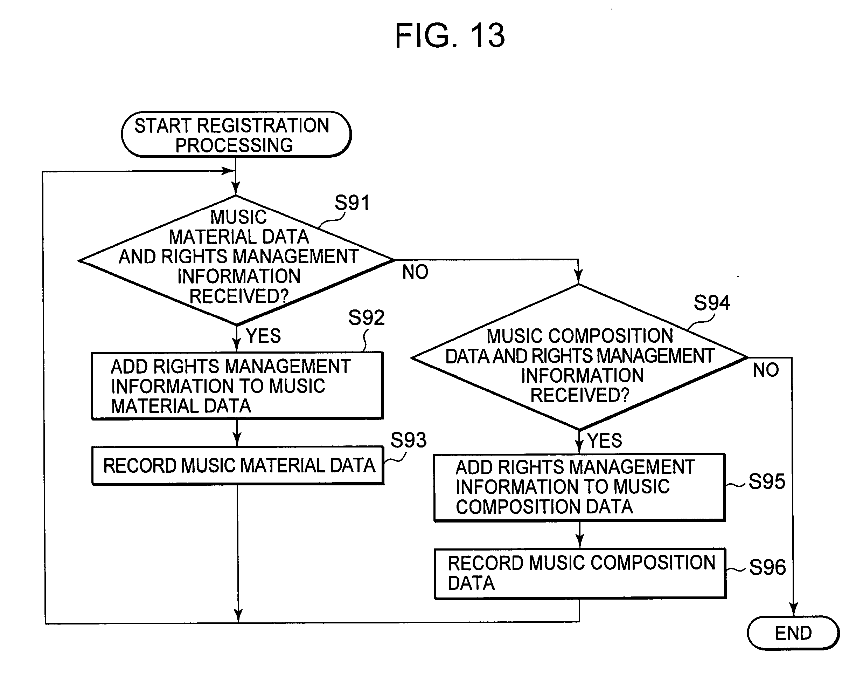

Registration processing by the server 13 is described with reference to the flowchart of FIG. 13.

The server 13 carries out the registration processing when the music material data and the rights management information is transmitted from the music material data generating apparatus 11 or when the music composition data and the rights management information is transmitted from the music composition data generating apparatus 12.

In step S91, the music material data controller 151 determines whether or not the communication section 150 has received the music material data and the rights management information.

In step S91, in a case where it is determined that the communication section 150 has received the music material data and the rights management information, the music material data and the rights management information is supplied from the communication section 150 to the music material data controller 151. The process then goes to step S92, and the music material data controller 151 adds rights management information to the music material data on the basis of the supplied music material data and rights management information and supplies the music material data with the rights management information added thereto to the music material data recorder 152.

For example, in step S92, the music material data controller 151 refers to a pre-recorded registration information table so as to add the rights management information to the music material data on the basis of the supplied music material data and rights management information and supplies the music material data with the rights management information added thereto to the music material data recorder 152.

Therefore, in a case where, for example, the music material data controller 151 records therein the registration information table shown in FIG. 9and the registration information ID contained in the rights management information is "1", the music material data controller 151 adds rights management information in which the access rights information is set to "public", the copying rights information to "1", rights management information with "not permitted" to the editing rights information to the music material data, and supplies the music material data with the rights management information added thereto to the music material data recorder 152.

More specifically, the music material data controller 151 refers to a pre-recorded registration information table, and adds rights management information to the music material data on the basis of the registration information ID and the user ID contained in the supplied rights management information. For example, when "friends" or "private" is set to the access rights information, it is also preferable that the rights management information transmitted from the music material data generating apparatus 11 includes information required by the rights management information added to the music material data such as a user ID and a login name of another user etc. in advance. Then, after a connection is made to the music material data generating apparatus 11 and authentication processing is carried out, the music material data generating apparatus 11 may transmit information required by the rights management information added to the music material data such as the user ID and the login name of other users, etc.

In step S93, the music material data recorder 152 records the music material data supplied by the music material data controller 151 and the process returns to step S91.

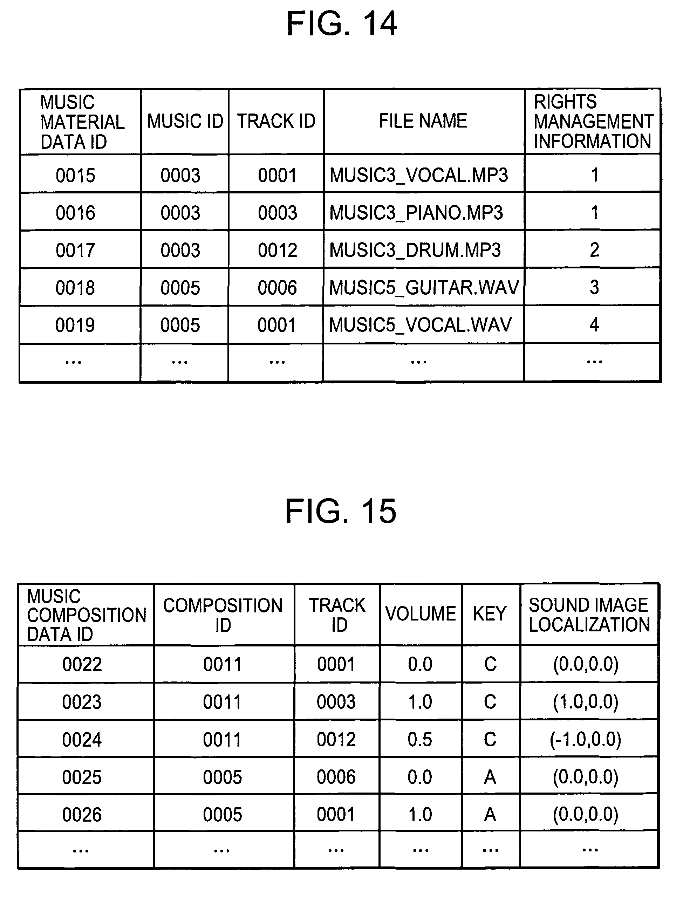

The music material data shown in FIG. 14 is therefore recorded, for example, on the music material data recorder 152.

In this case, the music material data recorder 152 records the music material data containing the rights management information set on the basis of the registration information specified by a music material data ID of "0015", a music ID of "0003", a track ID of "0001", a file name of "music3-vocal.mp3", and a registration information ID of "1".

The music material data recorder 152 records the music material data containing the rights management information set on the basis of the registration information specified by a music material data ID of "0016", a music ID of "0003", a track ID of "0003", a file name of "music3-piano.mp3", and a registration information ID of "1", and records the music material data containing rights management information set on the basis of the registration information specified by a music material ID of "0017", a music ID of "0003", a track ID of "0012", a file name of "music3-drum.mp3", and a registration information ID of "2".

Similarly, the music material data recorder 152 records the music material data containing the rights management information set on the basis of the registration information specified by a music material data ID of "0018", a music ID of "0005", a track ID of "0006", a file name of "music5-guitar.wav", and a registration information ID of "3", and records music material data containing rights management information set on the basis of the registration information specified by a music material ID of "0019", a music ID of "0005", a track ID of "0001", a file name of "music5-vocal.wav", and a registration information ID of "4".

On the other hand, in step S91, in a case where it is determined that the communication section 150 has not received the music material data and the rights management information, the process goes to step S94, and the music composition data controller 153 determines whether or not the communication section 150 has received the music composition data and the rights management information.

In step S94, in a case where it is determined that the communication section 150 has the received music composition data and the rights management information, the music composition data and the rights management information is supplied from the communication section 150 to the music composition data controller 153. Then, the process goes to step S95, and the music composition data controller 153 adds rights management information to the music composition data on the basis of the supplied music composition data and the rights management information and supplies the music composition data with the rights management information added thereto to the music component data recorder 154.

More specifically, the music composition data controller 153 adds rights management information to the music composition data on the basis of the supplied rights management information and user ID. For example, when "friends" or "private" is set to the access rights information, the rights management information transmitted from the music composition data generating apparatus 12 may include information required for the rights management information added to the music composition data such as a user ID and a login name of another user etc. in advance. Then, after a connection is made to the music composition data generating apparatus 12 and authentication processing is carried out, the music composition data generating apparatus 12 may transmit information required by the rights management information added to the music composition data such as the user ID and the login name of other users, etc.

In step S96, the music component data recorder 154 records the music composition data supplied by the music composition data controller 153, then, the process returns to step S91, and the aforementioned processing is repeated.

The music composition data shown in FIG. 15 is therefore recorded, for example, on the music component data recorder 154.

In this case, the music component data recorder 154 records the music composition data set with a music composition data ID of "0022", a composition ID of "0011", a track ID of "0001", a volume of "0.0", a key of "C", and sound image localization of (0.0, 0.0).

Further, the music component data recorder 154 records music composition data set with a music composition data ID of "0023", a composition ID of "0011", a track ID of "0003", a volume of "1.0", a key of "C", and sound image localization of (1.0, 0.0), and records music composition data set with a music composition data ID of "0024", a composition ID of "0011", a track ID of "0012", a volume of "0.5", a key of "C", and sound image localization of (-1.0, 0.0).

Similarly, the music component data recorder 154 records music composition data set with a music composition data ID of "0025", a composition ID of "0005", a track ID of "0006", a volume of "0.0", a key of "A", and sound image localization of (0.0, 0.0), and records music composition data set with a music composition data ID of "0026", a composition ID of "0005", a track ID of "0001", a volume of "1.0", a key of "A", and sound image localization of (0.0, 0.0).

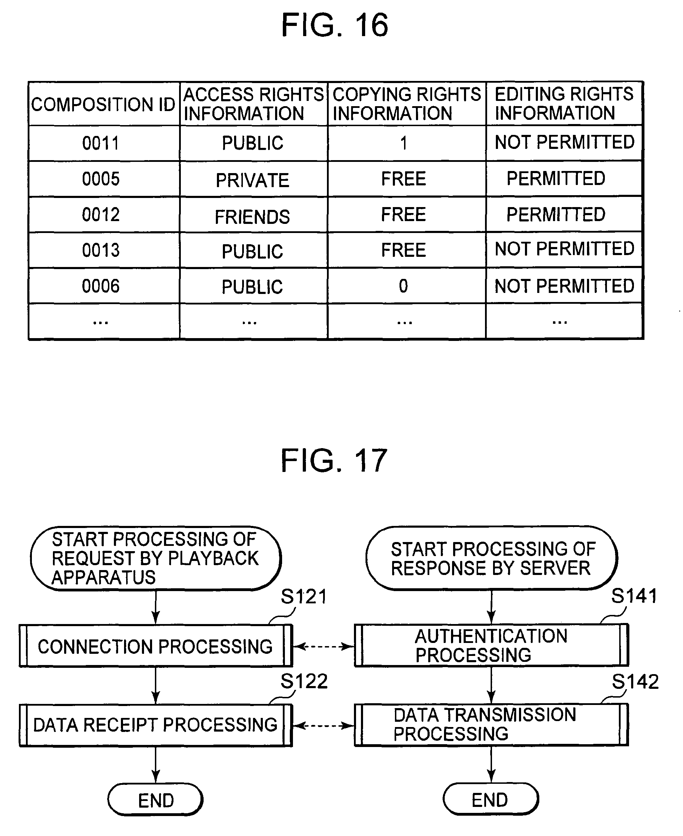

The rights management information shown in FIG. 16 is added to the music composition data recorded by the music component data recorder 154 for each composition ID contained in the music composition data.

Namely, rights management information with access rights information set to "public", copying rights information set to "1", and editing rights information set to "not-permitted" is added to the music composition data contained in the composition ID "0011".

Further, rights management information with access rights information set to "private", copying rights information set to "free", and editing rights information set to "permitted" is added to the music composition data containing a composition ID of "0005", and rights management information with access rights information set to "friends", copying rights information set to "free", and editing rights information set to "permitted" is added to music composition data containing the composition ID "0012".

Similarly, rights management information with access rights information set to "public", copying rights information set to "free", and editing rights information set to "not-permitted" is added to music composition data containing a composition ID of "0013", and rights management information with access rights information set to "public", copying rights information set to "0", and editing rights information set to "not permitted" is added to music composition data containing the composition ID "0006".

Returning to the flowchart of FIG. 13, in step S94, in a case where it is determined that the communication section 150 has not received the music composition data and the rights management information, the registration processing is therefore completed because the received music material data and the music composition data has been registered.

The server 13 then adds the rights management information to the music material data sent from the music material data generating apparatus 11 or to the music composition data transmitted from the music composition data generating apparatus 12, and records the music material data or the music composition data with the rights management information added thereto.

In this way, by recording the music material data or music composition data generated by a user, it is possible for the user not only to enjoy the music material data or music composition data that he/she himself/herself generated individually but also to make the data open to other users, and further to enjoy creation of music material data and music composition data. Further, by adding the rights management information to the music material data and the music composition data, it is possible for the user to have right to his/her works.

Next, a description is given with reference to FIG. 17 of processing for requests by the playback apparatus 14 and processing for responses by the server 13.

In step S121, the playback apparatus 14 carries out connection processing. In the connection processing, the playback apparatus 14 generates an authentication request signal indicating a request for authentication of a user and the generated authentication signal is transmitted to the server 13 via the communication network 15. The connection processing is described in detail later.

In step S141, the server 13 carries out authentication processing. In this authentication processing, the server 13 receives an authentication request signal transmitted from the playback apparatus 14 and carries out authentication processing on the basis of a user ID and a password contained in the received authentication request signal. The authentication processing is also described in detail later.

In step S142, the server 13 carries out data transmission processing and the response processing ends. In the data transmission processing, the server 13 transmits the music material data or the music composition data requested by the playback apparatus 14 to the playback apparatus 14 via the communication network 15. The details of the data transmission processing are described later.

In step S122, the playback apparatus 14 carries out data receipt processing and request processing ends. In the data receipt processing, the playback apparatus 14 receives the music material data or the music composition data transmitted from the server 13. The details of the data receipt processing are described later.

The playback apparatus 14 transmits an authentication request signal in this way, and the server 13 receives the authentication request signal transmitted from the playback apparatus 14. The server 13 then carries out user authentication on the basis of a user ID and a password contained in the received authentication request signal.

The server 13 then transmits the requested music material data or music composition data to the playback apparatus 14 via the communication network 15, and the playback apparatus 14 receives the music material data or music composition data transmitted from the server 13.

By downloading the desired music material data or music composition data from the server 13 using the playback apparatus 14, it is possible to change the combinations of the music material data and the music composition data so that music can be played back with different ambiences even for the same music and the user can therefore widely enjoy the music in accordance with their condition and preferences.

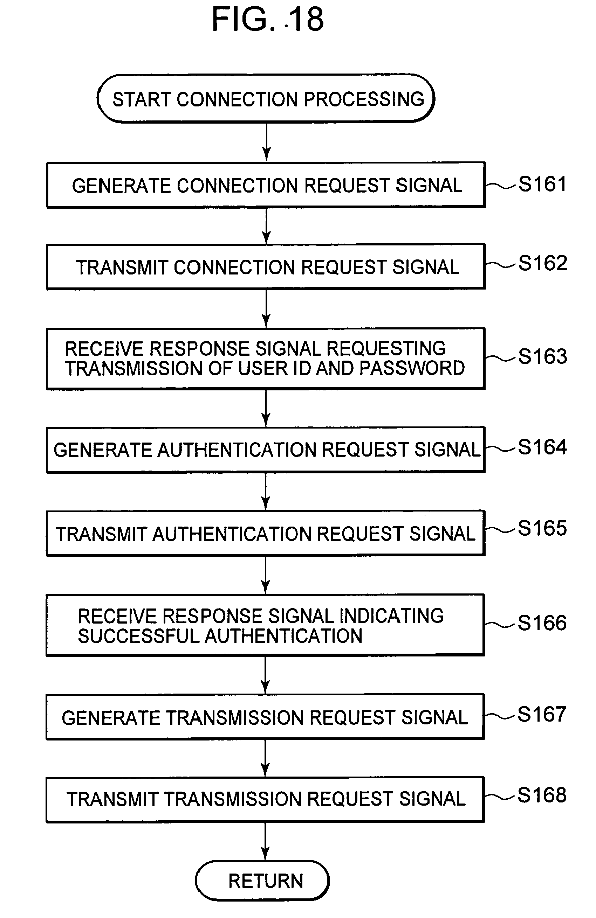

A description is now given with reference to the flowchart of FIG. 18 of connection processing corresponding to the processing of step S121 of FIG. 17.

When a user operates the input section 192 so as to designate downloading of the music material data or the music composition data, the input section 192 generates an input signal indicating downloading of the music material data or the music composition data according to this designation, and the generated input signal is supplied to the controller 193.

Because an input signal indicating downloading of the music material data or the music composition data is supplied by the input section 192, the controller 193 generates a connection request signal indicating a request for a connection to the server 13 in step S161 and the generated connection request signal is supplied to the communication section 191.

In step S162, the transmitter 211 of the communication section 191 transmits the connection request signal supplied by the controller 193 to the server 13 via the communication network 15.

When the server 13 receives the connection request signal, in the processing of step S141, the server 13 transmits a response signal indicating a request for transmission of a user ID and a password in order to carry out authentication. In step S163, the receiver 212 of the communication section 191 receives the response signal transmitted from the server 13, indicating a request for transmission of a user ID and a password and supplies the received response signal to the controller 193.

Because transmission of a user ID and a password is requested by the server 13, in step S164, the controller 193 generates an authentication request signal indicating a request for user authentication containing the user ID and the password according the input signal supplied by the input section 192 and the generated authentication request signal is supplied to the communication section 191.

In step S165, the transmitter 211 of the communication section 191 transmits the authentication request signal supplied by the controller 193 to the server 13 via the communication network 15.

When the server 13 receives the authentication request signal, user authentication is carried out. In the processing in step S141, the server 13 transmits a response signal indicating that the user has been authenticated. In step S166, the receiver 212 of the communication section 191 receives the response signal indicating that the user has been authenticated transmitted by the server 13 and supplies the received response signal to the controller 193.

Because the user has been authenticated, in step S167, the controller 193 generates a transmission request signal indicating a request to transmit the music material data or the music composition data in accordance with an input signal supplied by the input section 192 and supplies the generated transmission request signal to the communication section 191.

For example, in step S167, in a case where an input signal indicating to download the music material data is supplied to the controller 193 from the input section 192, the controller 193 generates a transmission request signal containing the music material data ID and the user ID designated by the input signal. For example, the transmission request signal contains music material data IDs and user IDs for all of the music material data constituting music data for a piece of music. In other words, for example, music material data IDs and user IDs for all of the music material data of the music material data recorded on the server 13 containing a prescribed music ID is contained in the transmission request signal. It is also possible to generate a transmission request signal containing only one music material data ID and a user ID, or to generate a transmission request signal containing a music ID and a user ID.

Further, for example, in step S167, in a case where an input signal indicating downloading of the music composition data is supplied to the controller 193 from the input section 192, the controller 193 generates a transmission request signal containing the music composition data ID and user ID designated by the input signal. Here, for example, the transmission request signal contains music composition data IDs and user IDs, including a prescribed composition ID, for all of the music composition data of the music composition data recorded on the server 13. It is also possible to generate a transmission request signal containing only one music composition data ID and a user ID, or to generate a transmission request signal containing a composition ID and a user ID.

In step S168, the transmitter 211 of the communication section 191 transmits the transmission request signal supplied by the controller 193 to the server 13 via the communication network 15 and the processing is completed.

The playback apparatus 14 generates an authentication request signal containing a user ID and a password and transmits the generated authentication request signal to the server 13 via the communication network 15. When the user is authenticated, the playback apparatus 14 generates a transmission request signal indicating a request for the music material data or the music composition data and transmits the generated transmission request signal to the server 13 via the communication network 15.

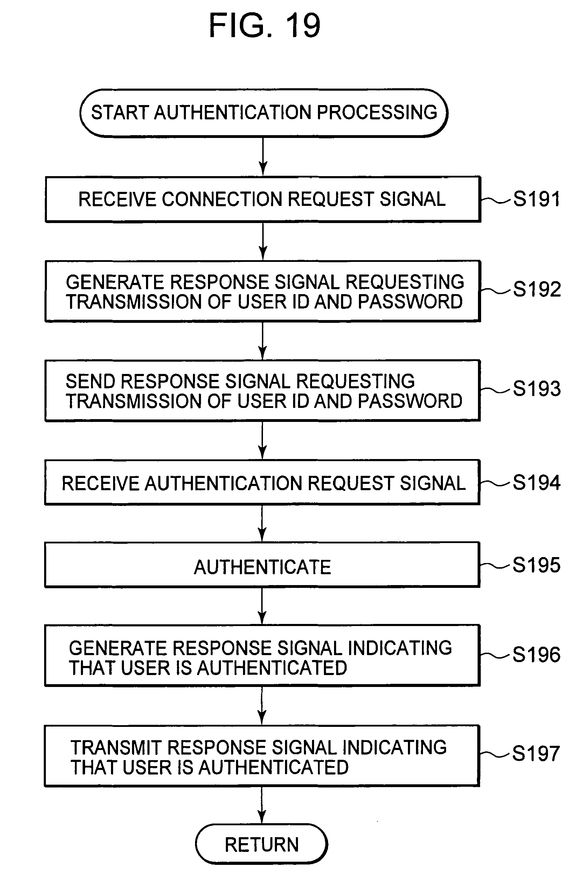

A description is now given with reference to the flowchart of FIG. 19 of authentication processing corresponding to the processing of step S141 of FIG. 17.

In the processing in step S121, a connection request signal is transmitted from the playback apparatus 14. In step S191, the receiver 172 of the communication section 150 therefore receives the connection request signal transmitted from the playback apparatus 14 and supplies the received connection request signal to the authentication section 155.

Because a connection is requested by the playback apparatus 14, the authentication section 155 generates, in step S192, a response signal indicating a request to transmit a user ID and a password in order to carry out authentication processing and supplies the generated response signal to the communication section 150.

In step S193, the transmitter 171 of the communication section 150 transmits a response signal indicating a request for transmission of a user ID and a password, supplied by the authentication section 155, to the playback apparatus 14 via the communication network 15.

When a response signal indicating a request for transmission of a user ID and a password is received, the playback apparatus 14 transmits an authentication request containing a user ID and a password. In step S194, the receiver 172 of the communication section 150 receives the authentication request signal requesting authentication of a user containing a user ID and a password transmitted from the playback apparatus 14 and supplies the received authentication request signal to the authentication section 155.

In step S195, the authentication section 155 determines as to whether or not a user who transmitted an authentication request signal is a legitimate user on the basis of the user ID and the password contained in the authentication request signal supplied by the communication section 150, and carries out user authentication.

Because the user who transmitted the authentication request signal has been authenticated as a legitimate user, in step S196, the authentication section 155 generates a response signal indicating that the user has been authenticated, and the generated response signal is supplied to the communication section 150.

In step S197, the transmitter 171 of the communication section 150 transmits a response signal indicating that the user has been authenticated, supplied by the authentication section 155, to the playback apparatus 14 via the communication network 15, and the processing is completed.

The server 13 then receives the authentication request signal transmitted by the playback apparatus 14 and authenticates the user on the basis of the user ID and password contained in the received authentication request signal.

The server 13 is able to prevent unauthorized access by carrying out authentication of a user in this way.

In the process for determining whether or not a user who transmitted an authentication request signal is a legitimate user on the basis of a user ID and a password contained in the authentication request signal, a description is given only for processing in the case where the user is authenticated as a legitimate user. However, in a case where it is determined that the user is not a legitimate user in processing for determining whether on not the user is a legitimate user, because this means that the user is not a user to whom the music material data or the music composition data may be transmitted, the response processing is therefore completed.

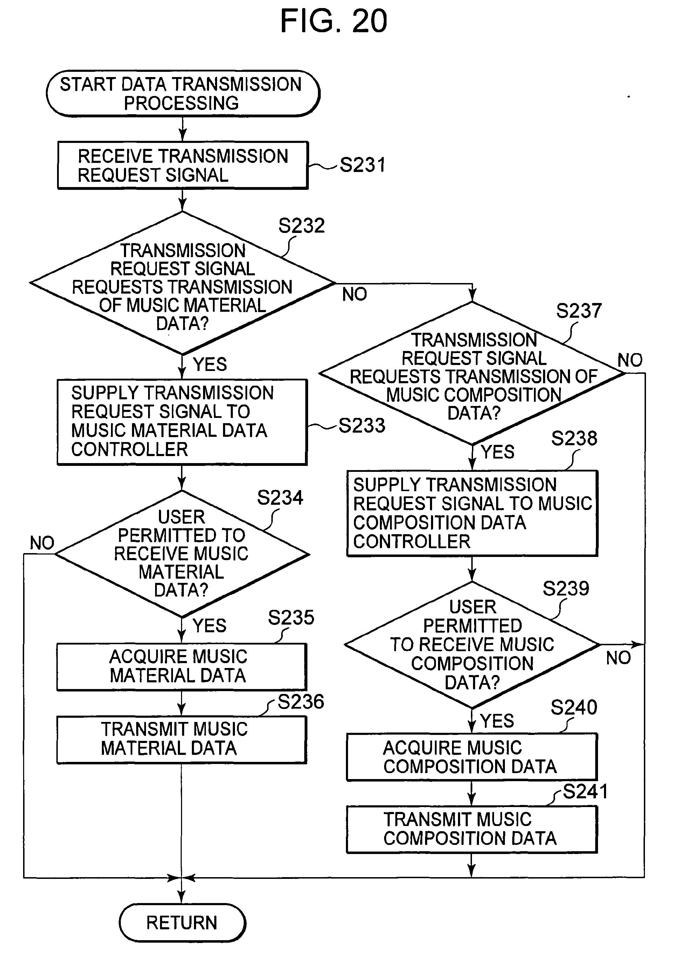

A description is now given with reference to the flowchart of FIG. 20 of the data transmission processing corresponding to the processing of step S142 of FIG. 17.

In the processing of step S121, a transmission request signal indicating a request to transmit the music material data or the music composition data is transmitted from the playback apparatus 14. As a result, in step S231, the receiver 172 of the communication section 150 receives the transmission request signal transmitted from the playback apparatus 14 and supplies the received transmission request signal to the authentication section 155.

In step S232, the authentication section 155 determines whether or not the transmission request signal provided by the communication section 150 is a transmission request signal indicating a request for transmission of the music material data, on the basis of a transmission request signal supplied by the communication section 150.

In step S232, in a case where it is determined that the transmission request signal supplied by the communication section 150 is a transmission request signal indicating a request for transmission of music material data, transmission of the music material data is requested. The process then goes to step S233, and the authentication section 155 supplies the transmission request signal supplied by the communication section 150 to the music material data controller 151.

In step S234, the music material data controller 151 determines whether or not the user requesting transmission of the music material data is a user to whom the requested music material data may be transmitted on the basis of rights management information contained in the music material data specified by the music material data ID contained in the transmission request signal supplied by the authentication section 155 and a user ID contained in the transmission request signal supplied by the authentication section 155.

In a case where, for example, that the access rights information is set to "public" in the rights management information contained in the requested music material data, the music material data controller 151 determines that the user requesting transmission of the music material data is a user to whom the requested music material data may be transmitted.

In step S234, in a case where it is determined that the user requesting transmission of the music material data is a user to which the requested music material data may be transmitted, the process goes to step S235, and the music material data controller 151 acquires the requested music material data from the music material data recorder 152 and supplies the acquired music material data to the communication section 150.

In step S236, the transmitter 171 of the communication section 150 transmits the music material data supplied by the music material data controller 151 to the playback apparatus 14 via the communication network 15, and the processing is completed. For example, in step S236, the transmitter 171 of the communication section 150 transmits all of the music material data constituting the music data for a piece of music to the playback apparatus 14 via the communication network 15.

On the other hand, in step S234, in a case where it is determined that the user requesting transmission of the music material data is not a user to whom the requested music material data may be transmitted, the music material data is not transmitted to the playback apparatus 14. The processes of step S235 and step S236 are therefore skipped, and the processing is completed.

Further, in a case where it is determined in step S232 that the transmission request signal supplied by the communication section 150 is not a transmission request signal indicating a request for transmission of the music material data, this means that transmission of the music material data is not requested actually. Therefore, the process proceeds to step S237 and the authentication section 155 determines whether or not the transmission request signal supplied by the communication section 150 is a transmission request signal indicating a request for transmission of the music composition data.

In step S237, in a case where it is determined that the transmission request signal supplied by the communication section 150 is a transmission request signal indicating a request for transmission of the music composition data, this means that transmission of the music composition data is actually requested. The process then goes to step S238, and the authentication section 155 supplies the transmission request signal supplied by the communication section 150 to the music composition data controller 153.

In step S239, the music composition data controller 153 determines whether or not the user requesting transmission of the music composition data is a user to whom the requested music composition data may be transmitted, on the basis of rights management information contained in the music composition data specified by the music composition data ID contained in the transmission request signal supplied by the authentication section 155 and a user ID contained in the transmission request signal supplied by the authentication section 155.

In a case, for example, where the access rights information is set to "public" in the rights management information contained in the requested music composition data, the music composition data controller 153 determines that the user requesting transmission of the music composition data is a user to whom the requested music composition data may be transmitted.

In step S239, in a case where it is determined that the user requesting transmission of the music composition data is a user to which the requested music composition data may be transmitted, the process proceeds to step S240, and the music composition data controller 153 acquires the requested music composition data from the music composition data recorder 154 and supplies the acquired music composition data to the communication section 150.

In step S241, the transmitter 171 of the communication section 150 transmits the music composition data supplied by the music composition data controller 153 to the playback apparatus 14 via the communication network 15, and the processing is completed. For example, in step S241, the transmitter 171 of the communication section 150 transmits all of the music composition data containing the same composition ID to the playback apparatus 14 via the communication network 15.

On the other hand, in step S239, in a case where it is determined that the user requesting transmission of the music composition data is not a user to whom the requested music composition data may be transmitted, the music composition data is not transmitted to the playback apparatus 14. The processes of step S240 and step S241 are therefore skipped, and the processing is completed.

In step S237, in a case where it is determined that the transmission request signal supplied by the communication section 150 is not a transmission request signal indicating a request for transmission of the music composition data, this means that transmission of the music composition data is not requested actually. The processing of step S238 to step S241 is then skipped, and the processing is completes.

The server 13 then receives the transmission request signal transmitted from the playback apparatus 14 and transmits the requested music material data and music composition data to the playback apparatus 14 on the basis of the received transmission request signal.

In this way, the server 13 is capable of supplying a wide variety of music in accordance with the condition and preferences of a user by transmitting the music material data or the music composition data to the playback apparatus 14.

A description is now given with reference to the flowchart of FIG. 21 of data receipt processing corresponding to the processing of step S122 of FIG. 17.

In the processing of step S142, the music material data and the music composition data are transmitted from the server 13. In step S261, the controller 193 determines whether or not the communication section 191 has received the music material data.

In step S261, in a case where it is determined that the communication section 191 has received the music material data, the music material data is supplied from the communication section 191 to the controller 193. The process goes to step S262, and the controller 193 supplies the music material data supplied by the communication section 191 to the music material data recorder 194.

In step S263, the music material data recorder 194 records the music material data supplied by the controller 193 and the processing is completed.

On the other hand, in step S261, in a case where it is determined that the communication section 191 has not received the music material data, this means that the music material data has not been received actually. The process goes to step S264, and the controller 193 determines whether or not the communication section 191 has received the music composition data.

In step S264, in a case where it is determined that the communication section 191 has received the music composition data, the music composition data is supplied from the communication section 191 to the controller 193. The process then goes to step S265, and the controller 193 supplies the music composition data supplied by the communication section 191 to the music composition data recorder 195.

In step S266, the music composition data recorder 195 records the music composition data supplied by the controller 193 and the processing is completed.

Further, in a case where it is determined in step S264 that the communication section 191 has not received the music composition data, this means that the music composition data is not received actually. The processes of step S265 and step S266 are therefore skipped and the processing is completed.

The playback apparatus 14 then receives the music material data and the music composition data and records the received music material data or the music composition data.

As described above, by recording the music material data or the music composition data, it is possible for the user to change the combinations of the music material data and the music composition data so that a piece of music can be played back with different ambiences even for the same music and the user can therefore widely enjoy the music in accordance with their condition and preferences.

When a user operates the input section 192 so as to designate activation of an application program for playing back music, the playback apparatus 14 starts up an application program for playing back music. When a music playback application program is started up, the playback apparatus 14 executes processing for music playback.

Processing for music playback by the playback apparatus 14 is described with reference to the flowchart of FIG. 22.

In step S281, each part of the playback apparatus 14 carries out initialization settings necessary in the processing for music playback. For example, in step S281, the controller 193 refers to the music material data recorded in the music material data recorder 194 and the music composition data recorded in the music composition data recorder 195, generates image data for displaying a play list for music to be played back, and supplies the generated image data to the output section 197. The output section 197 then displays the play list at the output section 197 functioning as a display on the basis of the image data supplied by the controller 193.

Further, for example, in a case where an application program for music playback is activated, the playback apparatus 14 accesses the server 13 and is then able to download image data for displaying recommendation information such as " Recommendations of the Week" and "Download Ranking of This Week" etc. and advertising and displaying software update information for playing back music.

In step S282, the controller 193 determines whether or not an input signal indicating playback of the music has been supplied by the input section 192.

In step S282, in a case where it is determined that an input signal indicating playback of the music has been supplied by the input section 192, playback of the music is designated. The process goes to step S283, and the controller 193 generates a control signal indicating playback of the music containing a music ID and a composition ID designated by the user and supplies the generated control signal to the playback section 196.

For example, in step S283, the controller 193 generates a control signal indicating playback of the music containing a music ID "0003" and a composition ID "0011" designated by the user and supplies the generated control signal to the playback section 196.

In step S284, the music data generator 213 of the playback section 196 generates music data on the basis of a control signal supplied by the controller 193.

For example, in step S284, the music data generator 213 of the playback section 196 acquires the music composition data containing a composition ID contained in the control signal supplied by the controller 193 from the music composition data recorder 195 and acquires the music material data containing a music ID contained in the control signal supplied by the controller 193 from the music material data recorder 194. The music data generator 213 of the playback section 196 then generates music data on the basis of the acquired music material data and music composition data.

Therefore, in a case where, for example, a music ID "0003" and a composition ID "0011" are contained in the control signal supplied by the controller 193, the music material data recorder 194 is recorded with the music material data shown in FIG. 14, and the music composition data recorder 195 is recorded with the music composition data shown in FIG. 15, the music data generator 213 of the playback section 196 acquires the music composition data containing the composition ID "0011" from the music composition data recorder 195.

In this case, the music data generator 213 of the playback section 196 acquires music composition data of a music composition data ID of "0022", music composition data of a music composition data ID of "0023", and music composition data of a music composition data ID of "0024" from the music composition data recorder 195.

The music data generator 213 of the playback section 196 acquires the music material data containing a music ID of "0003" that is music material data containing the same track ID as the track ID contained in the acquired music composition data.

In this case, the music data generator 213 of the playback section 196 acquires music material data of a music material data ID of "0015" containing a music ID "0003" and a track ID "0001", music material data of a music material data ID of "0016" containing a music ID of "0003" and a track ID of "0003", and music material data of a music material data ID of "0017" containing a music ID of "0003" and a track ID of "0012" from the music material data recorder 194.

The music data generator 213 of the playback section 196 then generates music data for playing back a piece of music of a music ID of "0003" on the basis of acquired data of a music composition data ID of "0022", data of a music composition data ID of "0023", data of a music composition data ID of "0024", music material data of a music material data ID of "0015", music material data of a music material data ID of "0016" and music material data of a music material data ID of "0017".

In this case, the music data generator 213 of the playback section 196 generates music data for playing back a track played back using music material data of a music material data ID of "0015" in accordance with playback conditions set in music composition data of a music composition data ID of "0022", playing back a track played back using music material data of a music material data ID of "0016" in accordance with playback conditions set in music composition data of a music composition data ID of "0023", and playing back a track played back using music material data of a music material data ID of "0017" in accordance with playback conditions set in music composition data of a music composition data ID of "0024".

In a case where music material data or music composition data is not designated by a user, it is possible to generate music data using preset music material data or music composition data. It may be arranged so that music data is not generated in a case where the music material data or the music composition data is not specified by a user.

In step S285, the playback section 196 decodes the music data generated by the music data generator 213 of the playback section 196 in conformity with a prescribed format and supplies the decoded music data to the output section 197.

For example, in step S285, the playback section 196 decodes the music data generated by the music data generator 213 of the playback section 196 in conformity with a prescribed format such as MP3 or WAV etc., and supplies the decoded music data to the output section 197.

In step S286, the output section 197 functioning as a speaker plays back music on the basis of the music data supplied by the playback section 196, and the process returns to step S282.

On the other hand, in a case where it is determined in step S282 that an input signal indicating playback of the music is not supplied by the input section 192, since the playback of the music is not designated, the process then proceeds to step S287, and the controller 193 determines whether or not music material data is selected by the user on the basis of an input signal supplied from the input section 192.

In a case where it is determined in step S287 that music material data is selected by the user, the controller 193 generates a control signal indicating acquisition of the music material data containing the music material data ID specifying the music material data selected by the user, the generated control signal is supplied to the playback section 196, and the processing proceeds to step S288.

In step S288, the playback section 196 acquires the music material data specified by the music material data ID contained in the control signal supplied by the controller 193 from the music material data recorder 194, holds the acquired music material data temporarily, and the processing returns to step S282.

At this time, the playback section 196 may acquire the music material data containing a music ID designated by the user from the music material data recorder 194.

Further, in a case where the music material data designated by the user is not recorded on the music material data recorder 194, it is possible to make a connection to the server 13 and download (acquire) the music material data designated by the user from the server 13. In this case, for example, it may be arranged that the user downloads and listens to part of the music material data that the user designated, and after carrying out fee processing at the server 13, downloads all the designated music material data.

In a case where it is determined that music material data is not selected by the user in step S287, because the music material data is not selected, the process goes to step S289 and the controller 193 determines whether or not music material data has been selected by the user on the basis of an input signal supplied by the input section 192.

In a case where it is determined in step S289 that music composition data is selected by the user, the controller 193 generates a control signal indicating acquisition of the music composition data containing the music composition data ID specifying the music composition data selected by the user, the generated control signal is supplied to the playback section 196, and the processing proceeds to step S290.

In step S290, the playback section 196 acquires the music composition data specified by the music composition data ID contained in the control signal supplied by the controller 193 from the music composition data recorder 195, holds the acquired music composition data temporarily, and the processing returns to step S282.

At this time, it may be arranged so that the playback section 196 acquires the music composition data containing a composition ID designated by the user from the music composition data recorder 195.

Further, in a case where music composition data designated by the user is not recorded on the music material data recorder 195, it is possible to make a connection to the server 13 and download (acquire) the music composition data designated by the user from the server 13. Further, in this case, for example, it may be arranged that the user downloads and listens to part of the music composition data that the user designated, and after carrying out fee processing at the server 13, downloads all the designated music composition data.

In a case where it is determined that music composition data is not selected by the user in step S289, because the music composition data is not selected, the process goes to step S291 and the controller 193 determines whether or not an input signal indicating completion of an application program for music playback has been supplied on the basis of an input signal supplied by the input section 192.

In step S291, in a case where it is determined that an input signal indicating completion of an application program for music playback has not been supplied, the process proceeds to step S292, each part of the playback apparatus 14 executes processing according to an input signal supplied to the controller from the input section 192, and the process returns to step S282.

For example, in a case where an input signal indicating stopping playback of the music is supplied from the input section 192 to the controller 193, the controller 193 generates a control signal indicating stopping playback of the music, and the generated control signal is supplied to the playback section 196. The playback section 196 then stops playback of music by stopping supply to the output section 197 on the basis of the control signal supplied by the controller 193.

In step S291, in a case where it is determined that an input signal indicating stopping of the application program for music playback is supplied, each part of the playback apparatus 14 stops all processing being executed so that the application program for music playback is stopped, and music playback is terminated.

The playback apparatus 14 generates music data on the basis of the music material data and music composition data designated by the user and plays back music on the basis of the generated music data.

By generating music data on the basis of the music material data and music composition data designated by a user, it is possible for the user to change the combination of the music material data and the music composition data even for the same music. It is therefore possible to enjoy the music with a different ambience and to enjoy a wide variety of music in accordance with a user's own condition and preferences.

Further, in a case where music data is generated on the basis of the music material data and music composition data designated by a user, it is possible, for example, to generate music data that does not contain vocal track data so as to enjoy the music as background music, or to playback only a preferred guitar part. It is also possible to reduce the volume of instruments other than the piano in order to enjoy the tonal quality of the piano itself.

It is possible for a user to enjoy a feeling as if actually playing along with other musicians by setting the volume of prescribed music material data to "0" so that the user can then play the corresponding track part. It is also possible for the user to further have a feeling of oneness at this time by taking data recorded for the performance of the user as music material data for a prescribed piece of music.

It is further possible to change the ambience of a piece of music by, for example, taking track data of a prescribed music such as drums and bass etc. as music material data for another music. Further, by taking information between music tracks and music information etc. as music material data, it is also possible to playback music without any breaks between the tracks or to have the user introduce the music to give the feeling of being a radio DJ (Disk Jockey).

A description is given where the music material data or the music composition data transmitted from the server 13 is received and the received music material data and music composition data is recorded. However, it is also possible to carry out processing for music playback in real time on the basis of the received music material data and the music composition data without recording the music material data or the music composition data.

In the above, the music data is generated as a result of the playback apparatus 14 performing playback in accordance with the playback conditions set in the music composition data on the basis of the music material data and the music composition data. It is therefore possible to play back a piece of music with a different ambience in an easy way even for the same music and for a wide variety of music to be supplied according to the condition and preferences of the user by changing the combinations of the music material data and the music composition data.

A description is given where the server 13 records the music material data and the music composition data but it is also possible to provide an apparatus for recording music material data and an apparatus for recording music composition data. It is also possible to arrange that a single apparatus has the functions provided by the music material data generating apparatus 11, the music composition data generating apparatus 12 and the playback apparatus 14.

According to the present invention, it is possible to play back music because music data is recorded. According to the present invention, music data is generated as a result of performing playback in accordance with playback conditions set, on the basis of music material data and music composition data, in the music composition data. It is therefore possible for a piece of music to be played back with a different ambience in an easy way even for the same music and for a wide variety of music to be supplied according to the condition and preferences of the user by changing the combinations of the music material data and the music composition data.

The series of processes described above are executed using hardware, but may also be executed using software. In a case where the series of processes is implemented using software, the programs constituting the software may be built into dedicated hardware of a computer. Alternatively, such program may be installed from a recording medium in, for example, a general-purpose personal computer capable of implementing various functions by installing the various programs therein.

As shown in FIG. 2, in addition to packaged media that are separate from a personal computer such as the magnetic disc 61 (including flexible discs), the optical disc 62 (including CD-ROMs (Compact Disc-Read Only Memory) and DVDs (Digital Versatile Discs)), magneto-optical discs 63 (including MDs (Mini-Discs)(Registered Trademark)), or semiconductor memory 64 etc. recorded with programs for distribution to provide programs to users, the recording medium may also be provided to the user through preliminary incorporation on a computer or in the form of a ROM 32 or a hard disc included in the recording section 38 recorded with the program.

A program for executing the series of processes described above may also be installed on a computer via an interface such as a router or a modem etc., or via a wired or wireless communication medium such as a local area network, the Internet, or digital satellite broadcasting etc., as necessary.

Further, in this specification, the steps described by programs stored in recording media are for processing carried out in chronological order in the order disclosed but this processing by no means has to be carried out in chronological order, and these processes may also be executed in parallel or individually.

Further, in this specification, "system" refers to the overall device configured from a plurality of devices.

In this specification, a network refers to a system where at least two devices are connected to each other so that a certain device is capable of transmitting information to another device. Devices communicating via the network may be independent devices or may be internal blocks that make up a single device.

Further, "communication" in this specification may refer to not only wireless communication and wired communication but also a combination of wireless communication and wired communication, in which wireless communication is carried out in certain sections and wired communication in other sections. Further, it is also possible for communication from a certain apparatus to another apparatus to be wired, with communication from the other apparatus to the certain apparatus then being wireless.

The present document contains subject matter related to Japanese Patent Application JP 2004-272218 filed in the Japanese Patent Office on September 17, 2004, the entire contents of which being incorporated herein by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, subcombinations and alterations may occur depending on design requirements and other factors insofar as they are within the scope of the appended claims or the equivalents thereof.

## Claims

1. An information processing system having a first information processing apparatus and a second information processing apparatus connected via a network, wherein:
said first information processing apparatus comprises:
first storing means for storing music material data constituting music data for playing back music;
second storing means for storing music composition data describing, for each item of said music material data, playback conditions for music to be played back using said music data composed of one or a plurality of items of said music material data; and
transmitting means for transmitting said music material data or said music composition data to said second information processing apparatus, and
said second information processing apparatus comprises:
receiving means for receiving said music material data or said music composition data transmitted from said first information processing apparatus; and
music data generating means for generating music data for playing back music in accordance with the playback conditions described in said music composition data on the basis of said music material data and said music composition data.

2. An information processing system having first to fourth information processing apparatuses connected via a network, wherein:
said first information processing apparatus comprises:
music material data generating means for generating music material data constituting music data for generating music; and
first transmitting means for transmitting generated music material data to said third information processing apparatus,
said second information processing apparatus comprises:
music composition data generating means for generating music composition data describing, for each item of said music material data, playback conditions for music to be played back using the music data composed of one or a plurality of items of said music material data; and
second transmitting means for transmitting the generated music composition data to said third information processing apparatus,
said third information processing apparatus comprises:
first receiving means for receiving said music material data transmitted from said first information processing apparatus or said music composition data transmitted from said second information processing apparatus;
first storing means for storing the received music material data;
second storing means for storing the received music composition data; and
third transmitting means for transmitting said music material data or said music composition data to said fourth information processing apparatus, and
said fourth information processing apparatus comprises:
second receiving means for receiving said music material data or said music composition data transmitted from said third information processing apparatus; and
music data generating means for generating music data for playing back music in accordance with the playback conditions described in said music composition data on the basis of said music material data and said music composition data.

3. The information processing system as claimed in Claim 2, wherein:
said third transmitting means transmits said music composition data or all music material data making up a single item of the music data to said fourth information processing apparatus.

4. The information processing system as claimed in Claim 2, wherein:
said music composition data generating means generates said music composition data describing, for each item of said music material data, the playback conditions containing information indicating volume, sound quality and sound image localization, information between music tracks, tracking down information, and effect information.

5. The information processing system as claimed in Claim 2, wherein:
said first transmitting means further transmits to said third information processing apparatus first rights management information containing information indicating access rights, copying rights and editing rights for said music material data to be transmitted,
said second transmitting means further transmits to said third information processing apparatus second rights management information containing information indicating access rights, copying rights and editing rights for said music composition data to be transmitted,
said first receiving means further receives said first rights management information transmitted from said first information processing apparatus or said second rights management information transmitted from said second information processing apparatus, and
said third transmitting means further transmits said music material data or said music composition data to said fourth information processing apparatus on the basis of said first rights management information and said second rights management information.

6. An information processing apparatus, comprising:
first storing means for storing music material data constituting music data for playing back music;
second storing means for storing music composition data describing, for each item of said music material data, playback conditions for the music to be played back in accordance with said music data composed of one or a plurality of items of said music material data; and
music data generating means for generating the music data for playing back the music in accordance with the playback conditions described in said music composition data on the basis of said music material data and said music composition data.

7. The information processing apparatus as claimed in Claim 6, wherein:
said second storing means stores said music composition data describing, for each item of said music material data, the playback conditions containing information indicating volume, sound quality and sound image localization, information between music tracks, tracking down information, and effect information.

8. The information processing apparatus as claimed in Claim 6, wherein:
said second storing means stores said music composition data for describing the playback conditions for the music to be played back in accordance with one item of said music material data.

9. An information processing method, comprising:
a first storing step of storing music material data constituting music data for playing back music;
a second storing step of storing music composition data describing, for each item of said music material data, playback conditions for the music to be played back in accordance with the music data composed of one or a plurality of items of said music material data; and
a music data generating step of generating the music data for playing back the music in accordance with the playback conditions described in said music composition data on the basis of said music material data and said music composition data.

10. A recording medium having recorded therein a program making a computer execute information processing comprising:
a first storing step of storing music material data constituting music data for playing back music;
a second storing step of storing music composition data describing, for each item of said music material data, playback conditions for the music to be played back in accordance with the music data composed of one or a plurality of items of said music material data; and
a music data generating step of generating the music data for playing back the music in accordance with the playback conditions described in said music composition data on the basis of said music material data and said music composition data.

11. A program making a computer execute:
a first storing step of storing music material data constituting music data for playing back music;
a second storing step of storing music composition data describing, for each item of said music material data, playback conditions for the music to be played back in accordance with the music data composed of one or a plurality of items of said music material data; and
a music data generating step of generating the music data for playing back the music in accordance with the playback conditions described in said music composition data on the basis of said music material data and said music composition data.

12. An information processing apparatus, comprising:
a first storing unit configured to store music material data constituting music data for playing back music;
a second storing unit configured to store music composition data describing, for each item of said music material data, playback conditions for the music to be played back in accordance with said music data composed of one or a plurality of items of said music material data; and
a music data generating unit configured to generate the music data for playing back the music in accordance with the playback conditions described in said music composition data on the basis of said music material data and said music composition data.
